# FASCICULE DE BREVET EUROPEEN

(11) **EP 2 588 394 B1**
(45) Date de publication et mention de la délivrance du brevet: **09.04.2014**
(21) Numéro de dépôt: 11725155.3
(22) Date de dépôt: 11.05.2011
(51) Int. Cl.: B65G 47/14, B67B 3/064

(54) **PROCEDE ET MACHINE DE PREPARATION D'OBJETS DU GENRE BOUCHONS, CAPSULES OU AUTRES**
VERFAHREN UND MASCHINE ZUR HERSTELLUNG VON STOPFEN, KAPPEN UND ANDEREN GEGENSTÄNDEN
METHOD AND MACHINE FOR PREPARING STOPPERS, CAPS, OR OTHER TYPES OF OBJECTS

(30) Priorité: 29.06.2010 FR 1055201
(43) Date de publication de la demande: 08.05.2013
(73) Titulaire: Sidel Participations, 76930 Octeville sur Mer (FR)
(72) Inventeur: LOPEZ, Rémy, F-76930 Octeville-sur-mer (FR); PETROVIC, Zmaj, F-76930 Octeville-sur-mer (FR); LAMOLY, David, F-76930 Octeville-sur-mer (FR)
(74) Mandataire: Cabinet Plasseraud
(86) Numéro de dépôt international: PCT/FR2011/051057
(87) Numéro de publication internationale: WO 2012/001252

(56) Documents cités:
- DE-A1- 1 556 588

## Description

La présente invention concerne le domaine des machines d'apprêt, généralement appelées "cap feeder", c'est-à-dire les machines qui sont capables, à partir d'un vrac d'objets du type bouchons, capsules ou autres, de livrer lesdits objets en bon ordre à un poste de bouchage sur une soutireuse, par exemple.

L'invention concerne, plus particulièrement, un procédé de préparation de ces objets au moyen d'une machine d'apprêt comprenant un convoyeur sans fin qui est tendu entre deux axes et dont le brin actif passe dans la trémie où sont stockés lesdits objets, lequel convoyeur comprend des tasseaux qui, au fur et à mesure de leur passage dans ladite trémie, captent des objets et effectuent, avec des moyens appropriés, une sélection parmi ces objets pour ne garder que ceux qui sont bien orientés avant de les livrer au poste de bouchage.

D'une manière plus précise encore, l'invention concerne, sur ces machines d'apprêt, un procédé original de vidange des tasseaux pour expédier les objets en bon ordre et en file indienne vers un poste de bouchage, sur une soutireuse, par exemple.

Ce type de machine d'apprêt, comme décrit dans le document FR 2 876 991, comprend :
- une trémie pouvant accueillir une grande quantité d'objets du type bouchons, capsules ou autres, en vrac,
- un convoyeur rectiligne sans fin à tasseaux, en forme de tapis, dont le brin actif prélève lesdits objets directement dans ladite trémie et, au-dessus de cette dernière,
- un poste de sélection et de tri qui permet de faire tomber et de recycler dans la trémie les objets mal installés et/ou mal orientés sur les tasseaux.

Le tapis-convoyeur sans fin peut être constitué d'une succession de tasseaux juxtaposés et assemblés sur des chaînes sans fin, lesquels tasseaux comportent une ou plusieurs rainures selon la dimension des objets à mettre en ordre et ces rainures captent lesdits objets selon des lignes qui sont horizontales, au fur et à mesure de leur passage, de bas en haut, dans la trémie.

Le brin actif du tapis-convoyeur s'élève, avec les tasseaux chargés d'objets, pour passer du poste de chargement, au niveau de la trémie, au poste de sélection et de tri qui comporte une sorte de dos d'âne disposé horizontalement. Ce dos d'âne provoque, au niveau des tasseaux, un mouvement de tangage qui a pour effet de déséquilibrer les objets mal orientés ou mal calés dans leur rainure et de les faire tomber dans la trémie où ils sont recyclés.

Après le dos d'âne, il reste quelques objets qui sont alignés dans chaque rainure, en général de l'ordre de cinq à dix objets pour un tapis-convoyeur ordinaire, et ces derniers sont amenés à une certaine hauteur par ledit tapis-convoyeur où ils sont expulsés hors de leur rainure, dans une zone d'accueil et de transit à partir de laquelle ils sont dirigés vers un dispositif de convoyage qui est aménagé pour les livrer, en file indienne, à la goulotte d'alimentation du poste de bouchage.

Dans le document FR précité, l'expulsion de chaque ligne d'objets, hors de la rainure correspondante, s'effectue au moyen de jets d'air comprimé, lesquels jets d'air sont positionnés sur un côté du convoyeur à tasseaux et ils propulsent lesdits objets vers la zone d'accueil et de transit qui se situe face à l'extrémité des rainures, de l'autre côté du tapis-convoyeur à tasseaux.

Les objets sont en fait projetés à l'horizontale dans une embouchure où ils doivent se concentrer sur une file pour entrer dans le couloir unifilaire du dispositif de convoyage. Cette embouchure a une entrée relativement large, dont la dimension est d'au moins deux fois la largeur d'une rainure de tasseau, et sa sortie correspond à la dimension d'une seule rainure pour guider correctement les bouchons.

Cette embouchure est une source d'ennuis en raison de la propension des objets à se bousculer devant sa sortie, ce qui provoque souvent des incidents et en particulier des coincements.

Par ailleurs, l'utilisation d'air comprimé pour éjecter les objets hors des rainures des tasseaux génère des dépenses énergétiques non négligeables et, en plus, des nuisances sur le plan sonore, à cause du bruit provoqué par l'échappement de l'air au niveau des ouïes de propulsion desdits objets.

Le dispositif de convoyage fonctionne lui aussi à l'air comprimé pour élever les objets et permettre leur livraison à l'entrée de la goulotte d'alimentation du poste de bouchage.

Lorsque le "cap feeder" fait partie d'un ensemble, c'est-à-dire lorsqu'il est combiné avec d'autres machines allant d'une souffleuse jusqu'à la soutireuse et plus, l'air comprimé utilisé pour l'éjection des objets véhicule des particules de poussières qui sont indésirables dans ce genre d'installation qui regroupe plusieurs machines pour des questions d'aseptisation ; ces poussières constituent une véritable pollution.

Il existe bien des machines qui n'utilisent pas de l'air comprimé pour éjecter les objets disposés dans les rainures des tasseaux. Dans le document US 4 735 343, par exemple, la vidange des rainures s'effectue au moyen d'une entrave en forme de barre, laquelle barre est disposée de façon inclinée par rapport au sens d'avancement du tapis-convoyeur de sorte que les objets sont éjectés de leur rainure au fur et à mesure de la progression dudit tapis-convoyeur.

Dans cette machine, les objets sont également éjectés à l'horizontale et ils tombent dans une zone de transit d'où ils sont dirigés vers une goulotte de convoyage.

Cette barre d'entrave affleure les tasseaux du tapis-convoyeur et elle agit par contact avec le dernier objet de la ligne à éjecter.

Un phénomène de frottement s'instaure entre le trio constitué du dernier objet, de la barre d'entrave et de la paroi inférieure de la rainure du tasseau. La vitesse de progression du tapis-convoyeur à tasseaux est généralement établie en fonction des risques liés à ce phénomène de frottement.

Une vitesse trop importante du tapis-convoyeur à tasseaux peut provoquer des incidents qui sont dus au coincement des objets entre l'entrave et la rainure du tasseau correspondant comme, par exemple, des déformations et/ou des détériorations desdits objets.

Par voie de conséquence, ce frottement a aussi pour effet de limiter la vitesse de défilement du tapis-convoyeur et de limiter la cadence de livraison des objets.

Ce type de moyen de vidange n'est d'ailleurs pas utilisable pour des objets du type capsules à cause justement de ces problèmes de coincement.

Il est également connu de DE 15 56 588 A1 un procédé selon le préambule de la revendication 1 et une machine d'apprêt comportant des tasseaux dont les rainures sont inclinées.

Ce document décrit, d'une part :
- un poste pour le chargement desdites rainures, lequel poste est constitué d'une trémie qui est portée par un châssis et qui contient lesdits objets à apprêter,
- un poste de sélection et de triage desdits objets, lequel poste est installé au-dessus de ladite trémie pour éliminer les objets mal positionnés dans lesdites rainures,
- un poste de préparation des objets dans leur rainure sous forme d'une ligne ou d'un train compact,
- un poste de vidange desdites rainures, lequel poste de vidange comprend une zone d'accueil et de transit où ledit train d'objets est dirigé vers la goulotte du dispositif de convoyage,
et, d'autre part, un système de convoyage constitué :
- dudit convoyeur à tasseaux,
- des moyens d'entraînement du convoyeur pour faire circuler le brin actif dudit convoyeur successivement dans ladite trémie, puis au poste de sélection et de tri et enfin au poste de vidange.

Un des inconvénients de cette machine est que les rainures ne sont pas toujours complètement remplies par des bouchons. En effet les rainures étant inclinées également lors de leur passage dans la trémie, la partie haute des rainures est dépourvue de bouchon car ceux-ci retombent dans la trémie.

L'invention propose de remédier aux inconvénients précités au moyen d'une machine d'apprêt qui, d'une part, peut s'affranchir de l'utilisation d'air comprimé pour vidanger les tasseaux et qui, d'autre part, peut fonctionner à grandes cadences pour la livraison des objets bien orientés.

L'invention propose tout d'abord un moyen original d'éjection des objets qui évite, d'une manière générale, d'agir par contact direct sur lesdits objets lors de leur éjection des rainures, évitant ainsi les incidents du type de ceux mentionnés auparavant comme le coincement et/ou la déformation des objets dans les rainures des tasseaux ou encore le coincement desdits objets à la sortie de l'embouchure qui les oriente vers la goulotte d'alimentation du poste de bouchage.

L'invention propose, en premier lieu, un procédé de vidange des tasseaux, sur une machine d'apprêt du type à convoyeur sans fin, et en particulier un procédé original de vidange des rainures de ces tasseaux lorsqu'ils sont garnis avec quelques objets prélevés dans la trémie de ladite machine d'apprêt, lesquels objets sont disposés en ligne sur les différents tasseaux et ils se présentent, après regroupement, sous la forme d'un train d'objets dans chaque rainure.

Contrairement à la dispersion que l'on observe dans les machines antérieures, le train d'objets qui sort d'une rainure de tasseau par application du procédé selon l'invention, conserve sa forme c'est-à-dire qu'il parvient à garder une forme quasi linéaire jusqu'à l'entrée du couloir unifilaire, en forme de goulotte, du dispositif de convoyage qui relie la machine d'apprêt à la goulotte d'alimentation du poste de bouchage.

Pour réaliser cette livraison des objets à la goulotte d'alimentation du poste de bouchage, l'invention propose des moyens complémentaires qui permettent d'élever les objets à une hauteur appropriée qui correspond à celle de l'entrée de ladite goulotte d'alimentation, lesquels moyens complémentaires permettent également de réaliser une opération additionnelle de sélection et de tri des objets avant leur expédition définitive vers ledit poste de bouchage.

L'invention concerne en fait un procédé global de préparation d'objets du genre bouchons, capsules ou autres, et elle concerne également la machine d'apprêt qui permet la mise en oeuvre de ce procédé, en vue d'alimenter un poste de bouchage sur une soutireuse, par exemple.

Selon l'invention, le procédé concerne la préparation d'objets du type bouchons, capsules ou autres, alignés dans les rainures des tasseaux d'un convoyeur sans fin d'une machine d'apprêt, en vue de leur livraison à un poste de bouchage d'une soutireuse, par exemple, lequel procédé consiste à modifier, au moyen desdits tasseaux, la position de chaque ligne d'objets, les faisant passer d'une position qui est horizontale à une position qui est suffisamment inclinée pour provoquer la vidange desdites rainures par gravité, expédiant lesdits objets vers une zone d'accueil et de transit où ils s'engagent, en file indienne, dans la goulotte d'un dispositif de convoyage capable de les livrer au niveau dudit poste de bouchage.

Selon une disposition optionnelle de l'invention, l'opération de vidange des rainures des tasseaux peut être réalisée par l'application d'une combinaison de moyens comprenant, en plus de la gravité, une propulsion des objets par jet(s) d'air comprimé, laquelle combinaison permet de limiter l'angle d'inclinaison des tasseaux et des trains d'objets et, par voie de conséquence, de limiter la longueur du brin actif du convoyeur sans fin à tasseaux et, d'une manière générale, celle dudit convoyeur sans fin.

Toujours selon un mode de réalisation optionnel de l'invention, dans ce procédé de préparation des objets, l'opération de vidange des rainures des tasseaux d'un convoyeur sans fin consiste à donner aux tasseaux une inclinaison qui est sensiblement verticale afin de réaliser une vidange complète et automatique desdits tasseaux par simple gravité.

Selon une autre disposition de l'invention, le procédé comporte une opération de préparation des objets alignés dans chaque rainure de tasseau, préalablement à sa vidange, laquelle opération de préparation consiste à déplacer la ligne d'objets vers le haut, dans sa rainure, de façon à pouvoir aménager une sorte d'avance à l'éjection, laquelle avance permet au train d'objets de commencer à prendre de la vitesse, par gravité, avant de quitter sa rainure.

Toujours selon un mode de réalisation optionnel de l'invention, dans ce procédé de préparation des objets, l'opération de vidange consiste, en plus, à induire, notamment sur la partie amont, ou tête, du train d'objets, au fur et à mesure de son mouvement de chute, un déplacement qui va dans le sens d'avancement du convoyeur sans fin, au niveau de la zone de vidange, lequel déplacement tient compte de la vitesse d'avancement dudit convoyeur sans fin et de l'accélération de la pesanteur pour placer chaque objet de ladite partie amont, au moins, en arrière de celui qui le précède, par rapport audit sens d'avancement, assurant une sorte d'équilibre et surtout de continuité verticale audit train d'objets au fur et à mesure de sa chute vers l'entrée de la goulotte du dispositif de convoyage.

Selon une autre disposition de l'invention, le procédé de préparation des objets consiste aussi :
- à accumuler, en file indienne, les objets qui proviennent du poste de vidange des tasseaux dans une première portion de la goulotte d'amenée des objets au dispositif de convoyage, pour gaver ce dernier,
- à faire prendre en charge lesdits objets au niveau de la partie inférieure de cette goulotte d'amenée et de gavage, par un système de propulsion, du type roue à encoches, disposé dans un module qui comprend un canal de guidage semi-circulaire, en forme de U,
- à élever lesdits objets dans une seconde portion de goulotte, appelée goulotte d'élévation, au-dessus du niveau de la zone de vidange, pour les amener, par exemple, à l'entrée de la goulotte d'alimentation d'un poste de bouchage, par exemple.

Toujours selon un mode de réalisation optionnel de l'invention, le procédé de préparation des objets consiste également à effectuer une opération complémentaire de sélection, de contrôle et de tri desdits objets, au niveau du module de propulsion afin d'éliminer les objets qui ne sont pas conformes et/ou ceux qui seraient encore mal orientés, après le passage du convoyeur à tasseaux sur le dos d'âne de la machine d'apprêt, laquelle opération complémentaire consiste, lors du passage desdits objets dans le canal de guidage semi-circulaire dudit module de propulsion, à mettre en oeuvre des moyens qui sont associés à la roue à encoches pour - maintenir les objets correctement orientés, et conformes, dans leurs encoches respectives durant le temps de passage devant une fenêtre d'éjection aménagée à la partie inférieure dudit canal de guidage ou pour
- abandonner les objets mal orientés ou non conformes devant ladite fenêtre d'éjection où ils sont évacués automatiquement.

L'invention concerne également la machine d'apprêt qui met en oeuvre le procédé de préparation et d'apprêtage des objets et en particulier le procédé de vidange des rainures qui sont aménagées sur les tasseaux du convoyeur sans fin,
- laquelle machine d'apprêt comprend, d'une part :
   - un poste de chargement desdites rainures comprenant une trémie qui est portée par un châssis pour contenir lesdits objets à apprêter,
   - un poste de sélection et de triage desdits objets, lequel poste est installé au-dessus de ladite trémie pour éliminer les objets mal positionnés et/ou mal orientés dans lesdites rainures,
   - un poste de préparation des objets dans leur rainure pour les mettre sous la forme de ligne ou de train compact, et,
   - un poste de vidange desdites rainures, lequel poste de vidange comprend une zone d'accueil et de transit où les objets sont dirigés, en file indienne, vers la goulotte de prise en charge desdits objets,
- et, d'autre part, un système de convoyage constitué :
   - dudit convoyeur à tasseaux qui comprend une chaîne sans fin tendue entre deux axes et sur laquelle sont fixés lesdits tasseaux, laquelle chaîne est du type apte à s'incurver, ou à serpenter, c'est-à-dire apte à former une courbe dans le plan passant par les axes de ses maillons notamment lorsque ces derniers sont dans un même plan,
   - des moyens d'entraînement de ladite chaîne sans fin pour faire circuler le brin actif dudit convoyeur à tasseaux successivement dans ladite trémie; puis au poste de sélection et de tri et enfin au poste de vidange,
   - d'un chemin en forme de crosse porté par ledit châssis et qui se décompose, du côté de la partie active de prélèvement des objets, en plusieurs portions dont, notamment : - une première portion rectiligne montante qui s'étend dudit poste de chargement jusqu'à un niveau situé au-dessus dudit poste de sélection et de tri, - une portion plane inscrite en courbe et dans laquelle lesdits tasseaux basculent et se mettent en éventail afin de regrouper et de mettre en charge chaque ligne d'objets en vue de son éjection par gravité au niveau dudit poste de vidange, lequel chemin est constitué de rails qui se prolongent, au niveau desdits axes situés aux extrémités de ladite chaîne sans fin, par des flasques assurant la continuité desdits rails, lesquels rails et flasques coopèrent avec chaque tasseau pour en assurer le guidage et l'orientation sur la longueur dudit chemin.

Selon une disposition optionnelle de l'invention, la machine d'apprêt comporte deux moyens de vidange combinés : des moyens de vidange utilisant la gravité et le poids des objets et des moyens additionnels de vidange du type jet(s) d'air qui sont orienté(s) dans le sens des rainures, pour pousser et accélérer l'éjection de chaque train d'objets vers la zone d'accueil et de transit.

Toujours selon un mode de réalisation optionnel de l'invention, dans le cas d'une opération de vidange purement gravitaire, le chemin en forme de crosse du convoyeur sans fin comporte, au niveau du poste de vidange, une seconde portion rectiligne qui est disposée en bout de ladite crosse, laquelle seconde portion s'étend à l'horizontale dans un plan sensiblement vertical au niveau du poste de vidange, pour orienter les rainures desdits tasseaux verticalement, en face de la zone d'accueil et de transit des objets où s'effectue la vidange.

Selon une autre disposition de l'invention, la chaîne sans fin du convoyeur à tasseaux est aménagée pour s'incurver dans le plan des axes de ses maillons, laquelle chaîne sans fin est fixée sur l'une des extrémités desdits tasseaux et, en particulier, sur l'extrémité qui est située du côté du petit rayon de courbure du chemin en forme de crosse, c'est-à-dire du côté de la zone d'accueil et de transit des objets.

Toujours selon un mode de réalisation optionnel de l'invention, les moyens de guidage et d'orientation des tasseaux sur le chemin en forme de crosse comprennent :
- d'une part, des rails disposés latéralement sur le châssis pour établir la surface de circulation desdits tasseaux et contrôler leur tangage, lesdits tasseaux comportant des éléments de guidage disposés à leurs extrémités pour coopérer avec lesdits rails latéraux, et,
- d'autre part, un rail faisant office de came pour régler le calage angulaire des tasseaux les uns par rapport aux autres, lesquels tasseaux comportent au moins une paire de galets suiveurs qui sont guidés par ledit rail-came pour adapter l'orientation desdits tasseaux en fonction de leur position sur ledit chemin et leur faire prendre, en particulier, - une position horizontale pour le poste de chargement et pour le poste de sélection et de tri et, - une position sensiblement verticale pour le poste de vidange avec, entre les deux, - une position évolutive en éventail pour le poste de préparation de la vidange desdits tasseaux.

Selon une autre disposition de l'invention, le rail d'orientation des tasseaux, en forme de came, se situe entre les deux rails latéraux, à une distance du rail latéral interne, c'est-à-dire celui qui est du côté de la zone d'accueil et de transit, qui correspond sensiblement au tiers de la distance qui sépare lesdits rails latéraux.

Toujours selon un mode de réalisation optionnel de l'invention, la machine comporte des moyens pour préparer l'opération de vidange, lesquels moyens sont disposés en amont de la zone d'accueil et de transit où s'effectue la vidange et ils consistent en un aménagement du genre rampe, formant un ressaut, qui fait office de guide et qui se termine en une sorte de déversoir, laquelle rampe est interposée entre les tasseaux et le panneau frontal qui retient les bouchons disposés dans les rainures desdits tasseaux, laquelle rampe a pour fonction de mettre en charge la ligne d'objets en la soulevant sur une distance qui est de l'ordre de deux fois la largeur d'une rainure, pour préparer son éjection, et aussi pour générer, par un accroissement de son énergie potentielle, une avance à l'éjection qui est exploitable sous forme de vitesse au moment de la libération de ladite ligne d'objets, c'est-à-dire lorsque l'objet de la tête de file aborde l'extrémité de ladite rampe et jusqu'au moment où il pénètre dans la zone d'accueil et de transit, et cette vitesse initiale permet de réduire le temps total de vidange de chaque rainure et d'améliorer ainsi la cadence de traitement des objets.

Selon une autre disposition de l'invention, la partie aval de la rampe est aménagée en forme de guide et ce guide s'étend depuis l'extrémité de ladite rampe jusqu'à l'entrée de la goulotte de prise en charge des objets, lequel guide comporte une surface de glissement dont le tracé est une courbe en forme de parabole, laquelle courbe est établie en tenant compte de la vitesse d'avancement des tasseaux et de l'accélération de la pesanteur, de façon à maintenir le train d'objets sous la forme d'une colonne, pendant sa chute et, en particulier, à faire en sorte que n'importe quel objet, quelle que soit sa position dans ladite colonne, soit toujours légèrement en arrière de l'objet qui le précède dans un sens qui correspond au sens d'avancement du convoyeur sans fin à tasseaux au niveau de la zone d'accueil et de transit.

Toujours selon un mode de réalisation optionnel de l'invention, la machine comporte un panneau frontal qui couvre les tasseaux garnis d'objets, lequel panneau s'étend longitudinalement au-delà du guide, au-dessus de la zone d'accueil et de transit desdits objets, sur une distance qui est de l'ordre de deux fois la largeur de la rainure desdits tasseaux, et ledit panneau frontal se prolonge longitudinalement au moyen d'une sorte de volet qui laisse un jeu important entre lui et lesdits objets, lequel jeu correspond à l'épaisseur dudit panneau frontal.

Cet aménagement permet d'obtenir une libération totale et complète des objets par rapport à leur rainure au niveau de l'extrémité du poste de vidange ; en effet, les objets en question, des bouchons, par exemple, peuvent rester appliqués dans leur rainure, sous la pression qui est susceptible d'être exercée par le panneau frontal, et ceci en raison du faible jeu qui existe entre ce panneau et lesdits objets et en raison des défauts de planéité aussi bien dudit panneau frontal que ds tasseaux.

Ce volet peut, avantageusement, être monté sur le châssis de la machine au moyen de charnières de façon à accéder plus facilement à cette zone d'extrémité du poste de vidange.

Toujours selon un mode de réalisation optionnel de l'invention, les tasseaux du convoyeur se présentent sous la forme de plaques rectangulaires, chaque plaque étant munie, sur sa face visible, d'une ou de plusieurs rainures pour la capture des objets. De plus, chaque plaque comporte, sur sa face cachée, perpendiculairement à la ou aux rainures de capture desdits objets, un évidement qui est aménagé pour loger la chaîne sans fin, lequel évidement comporte, du côté du petit rayon de la courbe du poste de préparation, un rebord qui est arrondi avec un rayon correspondant sensiblement au rayon moyen de courbure de ladite chaîne sans fin au niveau dudit poste de préparation, laquelle chaîne sans fin comporte des maillons dont la longueur est de l'ordre du tiers de la largeur dudit tasseau et elle est solidaire de chaque tasseau au moyen d'une broche qui s'étend entre les rebords dudit évidement et qui traverse le maillon central de la portion de chaîne disposée dans ledit évidement.

Selon une autre disposition de l'invention, la face cachée de chaque tasseau comporte les galets qui coopèrent avec le rail d'orientation, lequel rail comporte deux gorges coopérant respectivement chacune avec l'un des galets, lesquels galets sont décalés l'un par rapport à l'autre dans le sens de la longueur dudit tasseau et ils se situent de chaque côté, sous les bordures dudit tasseau, de façon à se positionner en interférence les uns par rapport aux autres, les galets de l'un des tasseaux se positionnant à cheval sous le tasseau adjacent pour offrir un entraxe de galets, sur un même tasseau, dont la longueur est la plus importante possible, lequel entraxe permet d'obtenir une bonne précision pour l'orientation et pour le positionnement desdits tasseaux les uns par rapport aux autres, tout au long du chemin parcouru.

Toujours selon un mode de réalisation optionnel de l'invention, la chaîne sans fin du convoyeur à tasseaux est en prise avec une roue dentée qui est disposée à l'extrémité supérieure du brin actif dudit convoyeur à tasseaux, laquelle roue dentée est entraînée par un motoréducteur solidaire du châssis, à sa partie supérieure.

Selon une autre disposition de l'invention, les extrémités latérales des tasseaux, côté chaîne sans fin, sont taillées en biseau à partir de l'axe longitudinal de ladite chaîne sans fin, pour permettre la mise en éventail desdits tasseaux, et leur basculement, ou pivotement, au poste de préparation, et pour conserver, sur les portions rectilignes du chemin desdits tasseaux, un aboutement de ces derniers afin d'éviter l'incrustation intempestive d'objets entre deux tasseaux consécutifs.

Toujours selon un mode de réalisation optionnel de l'invention, chaque coin des tasseaux comporte des moyens de guidage pour coopérer avec les rails latéraux qui sont solidaires du châssis et pour suivre le chemin imposé par lesdits rails latéraux dont certaines parties sont rectilignes et d'autres parties sont courbes, soit dans un plan, soit sur une portion de cylindre au niveau des flasques de raccordement desdits rails, lesquels moyens de guidage comprennent des logements aménagés dans lesdits coins des tasseaux, pour positionner des éléments de guidage en forme de plots réalisés en matériau thermoplastique approprié, lesquels plots sont de forme cylindrique, centrés sur un axe parallèle à l'axe longitudinal du tasseau correspondant, pour pouvoir pivoter dans leur logement, et lesdits plots comportent une fente qui chevauche la partie active du rail latéral de guidage, laquelle partie active se présente sous la forme d'une languette sans fin.

Selon une autre disposition de l'invention, la machine comprend, sur l'un au moins de ses flancs, une fenêtre disposée au niveau du rail de guidage de s tasseaux, laquelle fenêtre est dimensionnée pour permettre le passage d'un tasseau et elle est normalement masquée par une plaque qui comporte une portion de languette de substitution, laquelle languette s'étend entre les deux extrémités de la languette principale desdits rails de guidage avec, entre ladite languette de substitution et ladite plaque, une sorte de bouchon qui s'encastre dans ladite fenêtre et qui permet de positionner et de caler, de façon précise, ladite languette de substitution par rapport à ladite languette principale.

Cet aménagement permet l'extraction de l'un au moins des tasseaux en cas d'incident et, notamment, il permet le replacement de ces tasseaux.

Selon une autre disposition de l'invention, la goulotte de prise en charge des objets comporte une entrée qui est disposée au niveau du poste de vidange, dans la zone d'accueil et de transit desdits objets, laquelle entrée présente une dimension inférieure ou égale à 1,5 fois la largeur de la rainure des tasseaux et, de préférence, inférieure ou égale à 1,5 fois le diamètre desdits objets, et cette entrée se situe à l'extrémité inférieure du guide parabolique de ladite zone d'accueil et de transit, laquelle zone d'accueil comporte toutefois un trop-plein avec un canal de dérivation pour recycler les objets qui auraient pu passer à côté de ladite entrée.

Toujours selon un mode de réalisation optionnel de l'invention, la machine d'apprêt comporte un conduit de recyclage des objets qui atteignent la zone d'accueil sans toutefois entrer dans la goulotte de prise en charge desdits objets, lequel conduit s'étend depuis le trop-plein jusqu'au niveau du poste de chargement, et, en particulier, dans la chambre de brassage qui se situe à la partie inférieure du convoyeur à tasseaux, entre ce dernier et une paroi qui délimite la trémie du côté dudit convoyeur, isolant les tasseaux dudit convoyeur par rapport au stock d'objets contenus dans ladite trémie.

Toujours selon un mode de réalisation optionnel de l'invention, le dispositif servant au convoyage des objets qui sortent du poste de vidange est constitué : - de la goulotte de prise en charge et d'amenée des objets qui fait office d'accumulateur en aval du poste de vidange, - d'une goulotte élévatrice qui s'étend jusqu'au niveau de l'entrée de la goulotte d'alimentation d'un poste de bouchage et, entre ces deux goulottes, - d'un module de propulsion qui comprend un canal de guidage semi-circulaire en U qui fait la jonction entre lesdites goulottes, lequel canal de jonction enveloppe partiellement une roue à encoches qui propulse lesdits objets dans ladite goulotte élévatrice.

Selon une autre disposition de l'invention, le module de propulsion du dispositif de convoyage présente, sur le canal de guidage, deux secteurs angulaires en forme d'arcs de cercle qui assurent un guidage permanent des objets et, entre les deux, un secteur angulaire ouvert, formant une fenêtre d'éjection qui permet de réaliser une opération additionnelle de sélection et de triage des objets et, en particulier, d'objets en forme de bouchons plastiques qui comportent un creux, lequel module devient un module de propulsion et de sélection et il comporte des moyens complémentaires de sélection des objets, lesquels moyens sont constitués d'un système d'accompagnement des objets qui est organisé pour maintenir les objets conformes et bien orientés dans ledit canal de guidage, ou pour larguer les objets non conformes, ou mal orientés, au niveau de ladite fenêtre d'éjection, lesquels moyens complémentaires de sélection se situent au niveau dudit canal de guidage dans lequel est logée la roue à encoches, et ils transforment ledit module de propulsion en un module polyvalent de propulsion et de sélection desdits objets.

Selon une autre disposition de l'invention, le système d'accompagnement des objets comprend une pluralité de doigts disposés en regard de chaque encoche de la roue de propulsion, chaque doigt étant mobile entre deux positions stables : - une première position stable pour laquelle le doigt est disposé dans le creux de l'objet qui est calé dans l'encoche correspondante, pour maintenir ledit objet dans son encoche lors du passage devant la fenêtre d'éjection et, - une deuxième position stable qui résulte d'un mouvement de recul du doigt sous l'effet d'un obstacle et en particulier sous l'effet d'un contact avec un objet mal orienté qui empêche ledit doigt de s'introduire dans le creux dudit objet.

Toujours selon un mode de réalisation optionnel de l'invention, le module de propulsion et de sélection du dispositif de convoyage comprend :
- un moteur d'entraînement de la roue de propulsion à encoches,
- un flasque disposé à distance de ladite roue, solidaire de l'axe d'entraînement de cette dernière,
- les doigts correspondant à chaque encoche, lesquels doigts sont montés sur ledit flasque de manière que toutes les extrémités de maintien desdits doigts s'étendent le long d'un cercle de référence qui est coaxial à l'axe d'entraînement de ladite roue à encoches.

Selon une autre disposition de l'invention, le module de propulsion et de sélection comporte, au niveau de la roue à encoches, - une paroi de fond qui constitue une paroi du canal de guidage, laquelle paroi de fond permet le guidage de la face supérieure des objets bien orientés et, en vis-à-vis de cette paroi de fond, il comporte - une paroi frontale en forme de glissière pour guider la base creuse desdits objets bien orientés, laquelle roue à encoches et le flasque porte-doigts sont montés sur un axe d'entraînement qui est incliné par rapport à la normale à ladite paroi de fond, dans une direction telle que le cercle de référence des extrémités de maintien des doigts coupe le plan de ladite glissière selon une ligne qui se situe au-dessus du niveau de l'axe de ladite roue à encoches ce qui signifie, en fait, que lesdits doigts pénètrent les creux des objets petit à petit, au fur et à mesure que lesdits objets s'approchent de la fenêtre d'éjection de façon à pouvoir les escorter et les maintenir lorsqu'ils passent devant ladite fenêtre.

Toujours selon un mode de réalisation optionnel de l'invention, le module de propulsion et de sélection comprend, au niveau de la roue à encoches, deux disques coaxiaux parallèles en matériau magnétique, l'un des disques, au moins, servant de guide pour les doigts de maintien des objets, lesquels doigts sont constitués d'une broche en matériau amagnétique et ils sont montés libres en translation dans l'un au moins des deux disques, selon une direction axiale, et un aimant permanent, fixé à ladite broche, permet à cette dernière de flotter entre les deux disques coaxiaux, entre une position active stable de maintien desdits objets et une position stable mais inactive, qui les laisse libres lors de leur passage devant la fenêtre d'éjection.

Selon une autre disposition de l'invention, le doigt de maintien magnétique comprend un espaceur en matériau amagnétique, lequel espaceur est disposé axialement entre l'aimant permanent et chacun des deux disques coaxiaux qui sont en matériau magnétique et il règle l'effort d'attraction entre ledit aimant permanent et chacun des disques, privilégiant, en valeur de force d'attraction, celle qui correspond au maintien dudit doigt en position inactive de maintien.

Toujours selon un mode de réalisation optionnel de l'invention, le module de propulsion et de sélection comprend une came de réarmement des doigts de maintien qui sont passés en position inactive de maintien des objets, laquelle came de réarmement est apte à ramener lesdits doigts de maintien lorsqu'ils sont situés en dehors du secteur correspondant à celui de la fenêtre d'éjection, depuis leur position inactive de maintien jusqu'à la position active de maintien des objets.

Selon une disposition préférentielle de l'invention, les doigts de maintien présentent chacun une extrémité assurant leur réarmement, laquelle extrémité est disposée à l'opposé de leur extrémité de maintien, lesquelles extrémités de réarmement desdits doigts s'étendent le long d'un deuxième cercle de référence qui coupe le plan de la came de réarmement selon une ligne qui se situe au-dessus de l'axe de la roue à encoches, laquelle came de réarmement est parallèle à la paroi de fond et elle est fixe ou mobile en rotation, entraînée directement par le ou les doigts à réarmer.

Toujours selon un mode de réalisation optionnel de l'invention, la paroi de fond comporte un panneau qui est escamotable pour permettre une vidange du module de propulsion et de sélection, au niveau de la fenêtre d'éjection, et particulier pour retirer les objets qui sont retenus par les doigts de maintien et, éventuellement, ceux qui sont dans la goulotte d'élévation et/ou dans la goulotte d'amenée.

Selon une autre disposition de l'invention, la machine d'apprêt comporte, au niveau du dispositif de convoyage et, en particulier, au niveau de la goulotte élévatrice qui s'étend vers une goulotte d'alimentation d'un poste de bouchage, une courroie, sans fin, tendue entre deux poulies qui sont espacées verticalement, laquelle courroie fait office de paroi mobile au niveau de ladite goulotte élévatrice et elle circule à une vitesse qui est du même ordre que la vitesse de progression des objets dans ladite goulotte élévatrice, de préférence, cette vitesse d'évolution est supérieure, de l'ordre de 5 pour cent, à ladite vitesse de progression desdits objets dans ladite goulotte élévatrice.

Pour pouvoir être exécutée, l'invention est exposée de façon suffisamment claire et complète dans la description suivante qui, en plus, est accompagnée de dessins dans lesquels :
- la figure 1 est une vue en perspective de la machine d'apprêt selon l'invention à laquelle est associé le dispositif de convoyage avec son module de propulsion et de sélection des objets,
- la figure 2 représente, de façon isolée, le convoyeur sans fin à tasseaux de la machine d'apprêt, qui s'étend entre deux axes,
- la figure 3 est une vue de face de la machine d'apprêt et de son dispositif de convoyage avec le module de propulsion et de sélection, dont certaines parties sont écorchées pour montrer ses différents éléments constitutifs,
- la figure 4 représente le poste de vidange des tasseaux, c'est-à-dire la zone de vidange où les objets quittent leur rainure et la zone où ils sont accueillis pour être transférés, par simple gravité, vers l'entrée de la goulotte de prise en charge des objets et d'amenée de ces objets au dispositif de convoyage,
- la figure 5 est une coupe selon 5-5 de la figure 4 montrant le ressaut sur la machine d'apprêt, lequel ressaut est disposé entre les tasseaux et la paroi frontale de maintien des objets, en amont du poste de vidange,
- la figure 6 représente une portion du convoyeur à tasseaux où lesdits tasseaux sont disposés en éventail,
- la figure 7 représente un tasseau en perspective et montre, notamment, les rainures qui permettent de capter les objets ainsi que certains des éléments qui permettent de guider ledit tasseau,
- la figure 8 représente, de façon isolée, un élément de guidage des tasseaux, en forme de plot,
- la figure 9 est une vue en coupe selon 9-9 de la figure 6 montrant un tasseau qui coopère avec ses différents moyens de guidage,
- la figure 10 représente une portion de tasseau avec quelques maillons de la chaîne sans fin qui permet d'assembler les tasseaux entre eux et qui permet également de réaliser leur entraînement,
- la figure 11 est une élévation, en coupe transversale, de la trémie et de la structure de guidage des tasseaux,
- la figure 12 montre un rail latéral selon une coupe 12-12 de la figure 11, avec une portion de tasseau et une portion de la paroi frontale qui permet de guider et de retenir les objets pendant leur transfert par le convoyeur à tasseaux,
- la figure 13 montre, selon une coupe 13-13 de la figure 12, des portions adjacentes de tasseaux avec leurs moyens de guidage sur la languette d'un rail latéral,
- la figure 14 montre, de façon isolée, les éléments de guidage des tasseaux, à savoir les deux rails latéraux et le rail central,
- la figure 15 montre à une échelle plus grande que sur la figure 14, les différents éléments en forme de flasques qui forment l'enveloppe semi-cylindrique de guidage du convoyeur à tasseaux, à la partie inférieure de la machine d'apprêt, sous la trémie,
- la figure 16 montre, comme pour la figure 15, les différents éléments en forme de flasques qui forment l'enveloppe semi-cylindrique supérieure de guidage du convoyeur à tasseaux avec, en plus, la roue dentée pour l'entraînement de la chaîne sans fin du convoyeur à tasseaux et la motorisation dudit convoyeur,
- la figure 17 montre le module de propulsion et de sélection du dispositif de convoyage, lequel module comprend le canal de guidage qui fait la jonction entre la goulotte d'amenée des objets et la goulotte d'élévation,
- la figure 18 est une coupe partielle selon 18-18 de la goulotte d'amenée des objets, représentée figure 17,
- la figure 19 est une coupe partielle selon 19-19 du canal de guidage représenté figure 17,
- la figure 20 illustre l'entrée des objets dans le canal de guidage, en interaction avec la roue à encoches du module de propulsion et de sélection du dispositif de convoyage,
- la figure 21 est une élévation en coupe d'un mode de réalisation du module de propulsion et de sélection des objets, en fonctionnement normal,
- la figure 22 est une vue de la partie inférieure de la figure 21 montrant le fonctionnement du système d'accompagnement qui permet de faire une sélection et un tri des objets en cas de détection d'une anomalie sur un objet,
- la figure 23 est une vue de la partie inférieure de la figure 21 montrant le fonctionnement du système d'accompagnement en cas de passage d'un objet non conforme du genre objet qui n'a pas de bague d'inviolabilité,
- la figure 24 est une élévation en coupe du mécanisme bistable qui permet aux doigts de maintenir les objets ou de les laisser libres dans le canal de guidage,
- la figure 25 est un dessin de profil d'un doigt de maintien des objets,
- la figure 26 est une coupe diamétrale d'un autre mode de réalisation du module de propulsion et de sélection des objets,
- les figures 27 et 28 montrent, en coupe, un doigt faisant partie de la variante représentée figure 26, illustrant respectivement deux positions stables du doigt de maintien des objets,
- la figure 29 montre une machine d'apprêt selon l'invention, comportant plusieurs aménagements qui améliorent son fonctionnement et facilitent les interventions pour l'entretien et/ou le changement de pièces comme le changement des tasseaux en cas d'incidents ; elle fait également apparaître un perfectionnement au dispositif de convoyage des bouchons et en particulier leur élévation après le dispositif de tri desdits bouchons,
- la figure 30 montre, sous un autre angle, la machine d'apprêt et, en particulier, les aménagements qui permettent une intervention sur le tapis à tasseaux, pour le changement d'un tasseau défectueux, par exemple,
- la figure 31 montre une portion du tapis et de ses moyens de guidage au niveau de l'aménagement qui permet d'extraire un tasseau défectueux,
- la figure 32 montre le chapeau qui permet d'assurer une continuité du rail de guidage des tasseaux et qui, une fois enlevé, laisse un orifice suffisant pour permettre le passage d'un tasseau,
- la figure 33 montre une section du chapeau représenté figure 32,
- la figure 34 montre une variante de réalisation du poste de vidange des tasseaux représenté figure 4, et, en particulier, un aménagement de la surface frontale de guidage des bouchons qui permet d'éviter leur entraînement au-delà de cette zone d'éjection,
- la figure 35 montre une coupe horizontale selon 35-35 de la figure 34 du poste de vidange des tasseaux, et, en particulier, l'aménagement réalisé au niveau de la surface frontale de guidage des objets, pour éviter leur entraînement au-delà de cette zone d'éjection.

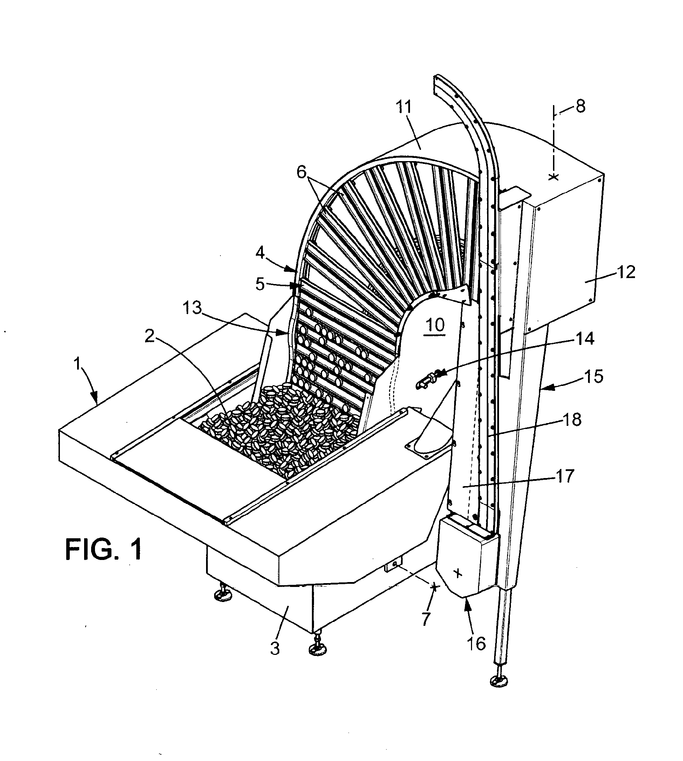

La figure 1 montre en perspective, une machine d'apprêt selon l'invention, laquelle machine comprend une trémie 1 qui est remplie d'objets 2, du genre bouchons, laquelle trémie repose sur un châssis général 3 qui est posé sur le sol.

Les objets 2 sont captés par un convoyeur 4 qui présente la particularité de comporter une chaîne 5 sans fin disposée latéralement, non apparente figure 1, et sur laquelle est fixée une multitude de tasseaux 6, lesquels tasseaux 6 sont à touche-touche dans les portions rectilignes dudit convoyeur 4, formant une sorte de tapis continu, et leur fixation sur la chaîne 5 sera détaillée plus loin.

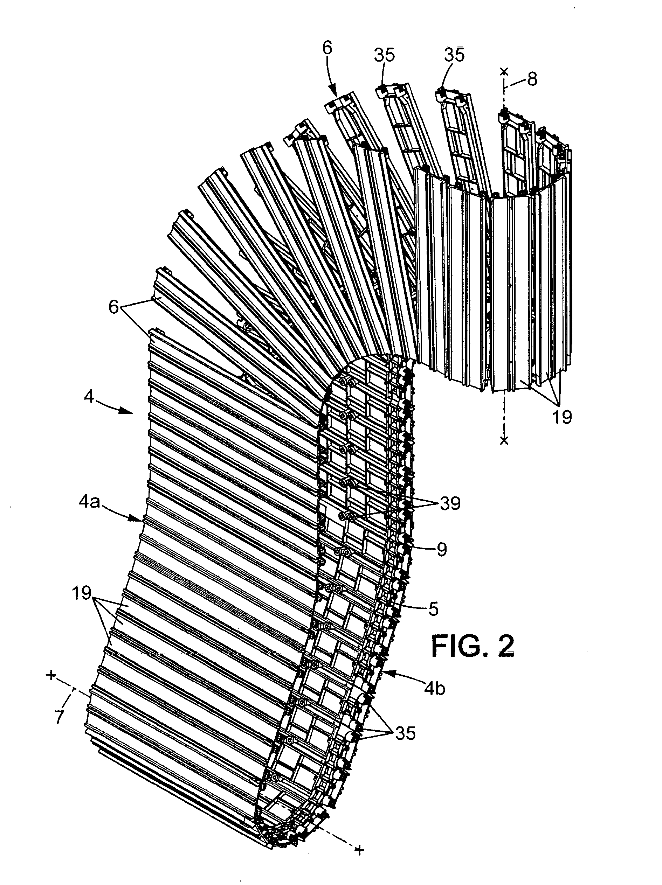

Le convoyeur 4 à tasseaux 6, qui est représenté seul, figure 2, s'étend, en forme de crosse, entre ses deux extrémités, lesquelles extrémités sont guidées respectivement sur un axe 7 inférieur horizontal et un axe 8 supérieur qui est représenté en position verticale.

Les tasseaux 6 sont assemblés sur les maillons 9 de la chaîne 5 sans fin, visible sur cette figure 2, laquelle chaîne 5 sera détaillée plus loin en liaison avec la description des tasseaux 6.

Le convoyeur 4 comporte un brin 4a actif, ou brin d'aller, qui passe dans la trémie 1 et qui prélève les objets 2, et un brin 4b inactif, ou brin de retour.

D'une manière générale, les brins actif et inactif sont disposés dans des plans qui sont sensiblement verticaux et ils sont guidés entre des parois qui partent du châssis 3 : une paroi 10 qui fait l'intérieur de la courbe du convoyeur 4 et une paroi 11 qui habille le contour extérieur dudit convoyeur 4. Une paroi 12 s'étend verticalement entre les extrémités des parois 10 et 11.

Entre le moment où ils sont prélevés dans la trémie 1, et le moment où ils sont éjectés des tasseaux 6, les objets 2 sont soumis à une opération de sélection et de tri qui est censée éliminer les objets mal orientés. Cette opération est réalisée au moyen d'un dos d'âne 13 qui est aménagé au-dessus du niveau de la trémie 1.

Ce dos d'âne 13 permet de déséquilibrer les objets 2 qui sont mal orientés en faisant tanguer légèrement les tasseaux 6 ; lesquels objets 2 mal orientés tombent automatiquement dans la trémie 1 et ils sont recyclés.

L'amplitude du tangage des tasseaux 6 du convoyeur 4, provoquée par ce dos d'âne 11, est réglable au moyen d'un mécanisme 14 qui modifie la position des organes latéraux de guidage dudit convoyeur 4.

On remarque tout de suite, sur ces figures 1 et 2, que les objets 2 sont prélevés par les tasseaux 6 du convoyeur 4, selon des lignes horizontales et que les trains d'objets 2 disposés dans ces tasseaux 6 sont éjectés ensuite, automatiquement, en passant d'une position horizontale à une position qui est suffisamment inclinée pour permettre cette éjection. Ce changement de position découle d'un mouvement de basculement angulaire de chacun des tasseaux 6, lequel basculement les met en éventail et les fait donc passer de la position horizontale à une position inclinée pouvant aller jusqu'à la verticale.

Par ce mouvement, les tasseaux 6 se vident et les objets pénètrent dans un dispositif 15 de convoyage qui va livrer lesdits objets 2 à la hauteur souhaitée en vue d'alimenter un poste de bouchage, non représenté, sur une soutireuse, par exemple.

Ce dispositif 15 de convoyage est solidaire du châssis 3 de la machine d'apprêt par l'intermédiaire des parois 10 à 12 et par l'intermédiaire de la trémie 1 ; il comprend un module 16 qui est aménagé avec des moyens qui permettent de propulser les objets 2, lesquels moyens de propulsion font de ce dispositif 15 une véritable pompe à bouchons notamment.

Toutefois, certains objets, et en particulier les bouchons creux en matériau thermoplastique, peuvent survivre à l'opération de sélection sur la machine d'apprêt et être embarqués bien qu'étant mal orientés et/ou non conformes. C'est le cas, notamment, d'un bouchon coincé entre deux bouchons bien orientés et qui passe le dos d'âne, et c'est aussi le cas des bouchons qui auraient perdu leur bague ou qui auraient été façonnés avec un défaut comme l'absence de bague ou même façonnés sans creux, ce qui en fait des bouchons pleins et bien sûr inutilisables.

Face à ces risques, l'invention propose, au niveau du module 16 de propulsion, des moyens additionnels intégrés qui consistent en un système d'accompagnement sélectif des objets 2 et qui permettent de réaliser une sélection et un tri complémentaire visant à éliminer ces bouchons mal orientés ainsi que les bouchons non conformes.

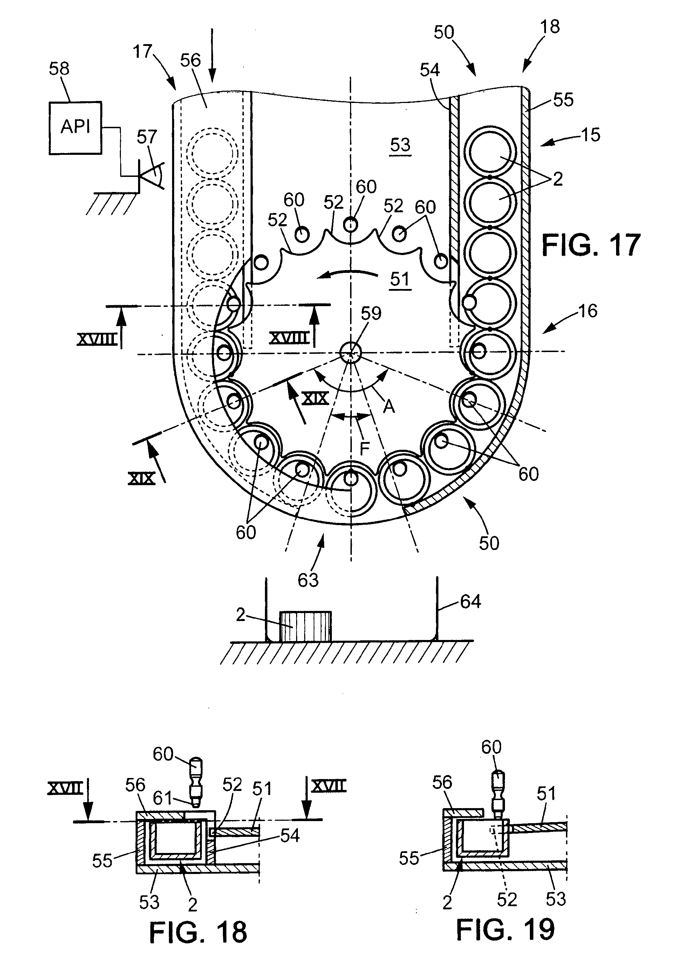

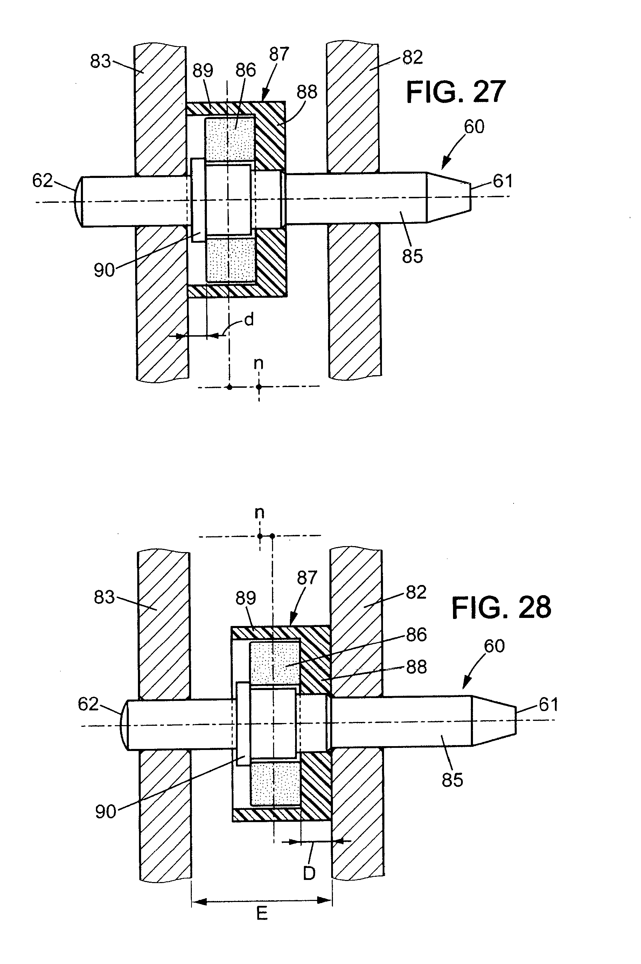

Ce module 16 de propulsion et de sélection des objets 2, qui sera détaillé plus loin en liaison avec les figures 17 à 28, s'interpose entre une goulotte 17 d'amenée et une goulotte 18 d'élévation.

La goulotte 17 d'amenée est sensiblement verticale et constitue une sorte de couloir unifilaire qui prend en charge les objets 2 dès la vidange des tasseaux 6.

La goulotte 18 d'élévation transfère et livre lesdits objets 2 à la hauteur souhaitée en vue d'alimenter un poste de bouchage, par exemple, non représenté.

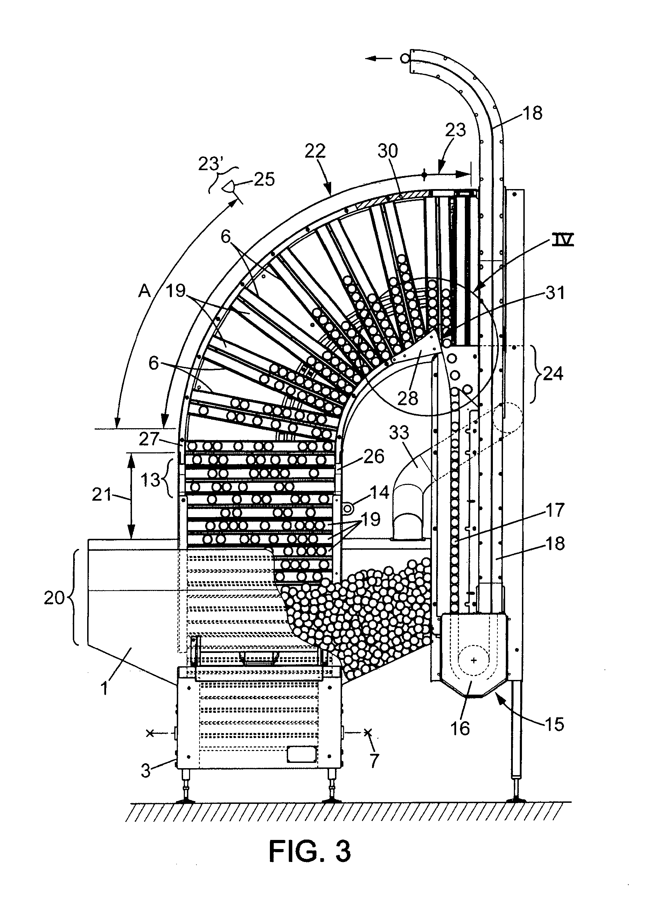

La figure 3 montre, en vue de face, la machine d'apprêt et le dispositif de convoyage avec son module de propulsion et de sélection. Sur cette figure 3, on remarque la trémie 1 dans laquelle circule le convoyeur 4 à tasseaux 6, lesquels tasseaux 6 comportent des rainures 19 qui captent, au fur et à mesure de leur passage dans ladite trémie 1, les objets 2.

Cette trémie 1 constitue un poste 20 de chargement des rainures 19 des tasseaux 6 du convoyeur 4, lequel poste 20 de chargement est suivi du poste 21 de sélection et de tri des objets 2 qui sont captés par lesdites rainures 19 des tasseaux 6 ; ce poste 21 comporte le dos d'âne 13 dont il a été question précédemment.

Au-dessus du poste 21 de sélection et de tri, on trouve une portion rectiligne du convoyeur 4 puis une portion qui s'inscrit en courbe, laquelle portion en courbe constitue le poste 22 de préparation des objets 2 où les tasseaux 6 se mettent en éventail en vue de leur vidange.

Ce poste 22 de préparation s'étend jusqu'au niveau du poste 23 de vidange desdits objets, là où lesdits objets 2 quittent les rainures 19 des tasseaux 6.

Le poste 22 de préparation s'étend sur un secteur courbe qui forme un angle de 90° ; sur ce secteur, les tasseaux 6 se mettent en éventail et ils passent d'une position horizontale à une position verticale.

Les lignes d'objets 2 disposées dans les rainures 19 des tasseaux passent elles aussi de l'horizontale à une position inclinée qui permet, dans un premier temps, de regrouper lesdits objets 2 vers l'extrémité inférieure desdites rainures 19 de façon à former une sorte de train d'objets 2, puis, dans un deuxième temps, au niveau du poste 23 de vidange, d'éjecter lesdits objets 2 par simple gravité pour atteindre la zone 24 d'accueil et de transit avant de pénétrer dans la goulotte 17 d'amenée du dispositif 15 de convoyage.

On obtient ainsi une éjection automatique des objets 2, sans utilisation de moyens autres que la gravité, c'est-à-dire que le train d'objets 2 est livré à lui-même dans la rainure 19 de chaque tasseau 6 et qu'il s'en échappe dès que les conditions de sa libération sont remplies.

Toutefois, on remarque, figure 3, que le train d'objets 2 se forme assez rapidement à partir du moment où les tasseaux 6 commencent à s'incliner et à basculer autour d'un axe qui est perpendiculaire au plan général vertical du brin 4a actif du convoyeur 4 dans sa partie située au-dessus du poste 21 de sélection et de tri.

La vidange des tasseaux 6 pourrait donc également être effectuée avant qu'ils n'atteignent la position verticale. Cette vidange pourrait être effectuée à partir d'une inclinaison A qui serait, par exemple, de l'ordre de 45° ; au niveau de ce poste 23' de vidange, pour accentuer l'action de la gravité, des moyens complémentaires comme par exemple une injection d'air comprimé au moyen d'une ou de plusieurs buses 25 pourrait être envisagée.

Cette possibilité de choisir l'inclinaison des tasseaux 6 pour effectuer la vidange permet également de choisir une cadence pour l'apprêtage des objets 2. Cette cadence qui est généralement de l'ordre de 30 000 à 60 000 objets par heure, peut augmenter en même temps que l'inclinaison desdits tasseaux 6.

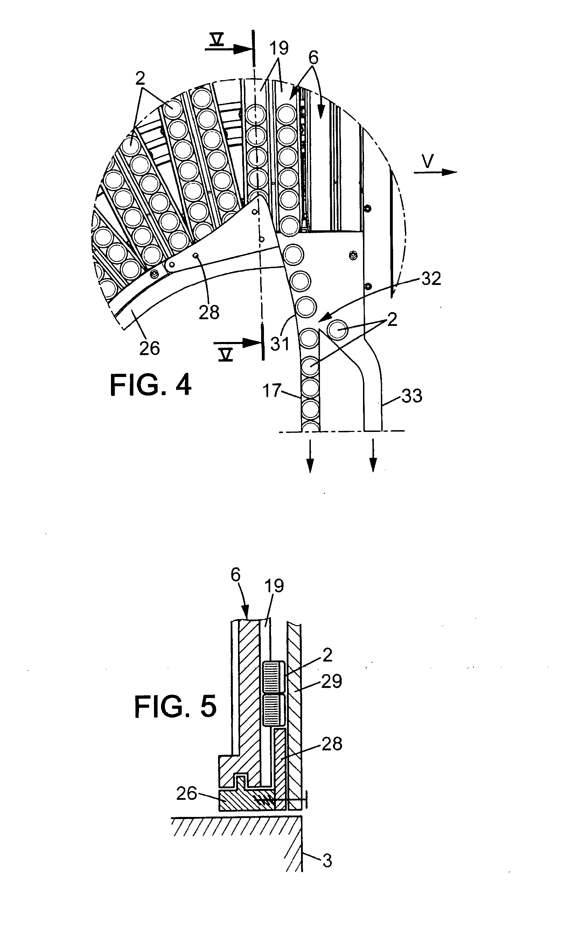

La figure 4 montre, d'une façon plus détaillée, l'aménagement du poste de vidange 23 et en particulier un aménagement qui permet, pratiquement, de doubler les cadences que l'on obtient avec une machine d'apprêt classique, du type de celle qui est décrite dans le document FR 2 876 991 précité.

Le convoyeur 4 est guidé sur tout son parcours par des rails 26 et 27 disposés latéralement, lesquels rails de guidage seront détaillés un peu plus loin. Aussi, lorsque les tasseaux 6 du brin 4a actif du convoyeur 4 passent de la position horizontale à la position verticale, les objets 2 se regroupent à la partie inférieure desdits tasseaux 6 et ils glissent sur le rail 26 qui ferme l'extrémité inférieure de chaque rainure 19 ; en se regroupant de la sorte, les objets 2 forment une sorte de train.

Dans la phase finale de préparation de ce train d'objets 2, avant d'arriver au poste 23 de vidange, ledit train d'objets 2 est soulevé, directement dans sa propre rainure 19, au moyen d'une rampe 28. Cette rampe 28 prend le relais du rail 26 ; elle forme une sorte de ressaut qui entre en contact avec l'objet 2 inférieur qui correspond à la tête de file du train d'objets 2 et cette rampe 28 écarte ledit objet 2 de tête par rapport au rebord inférieur du tasseau 6, le déplaçant lui et l'ensemble des objets 2 du même train, dans la rainure 19.

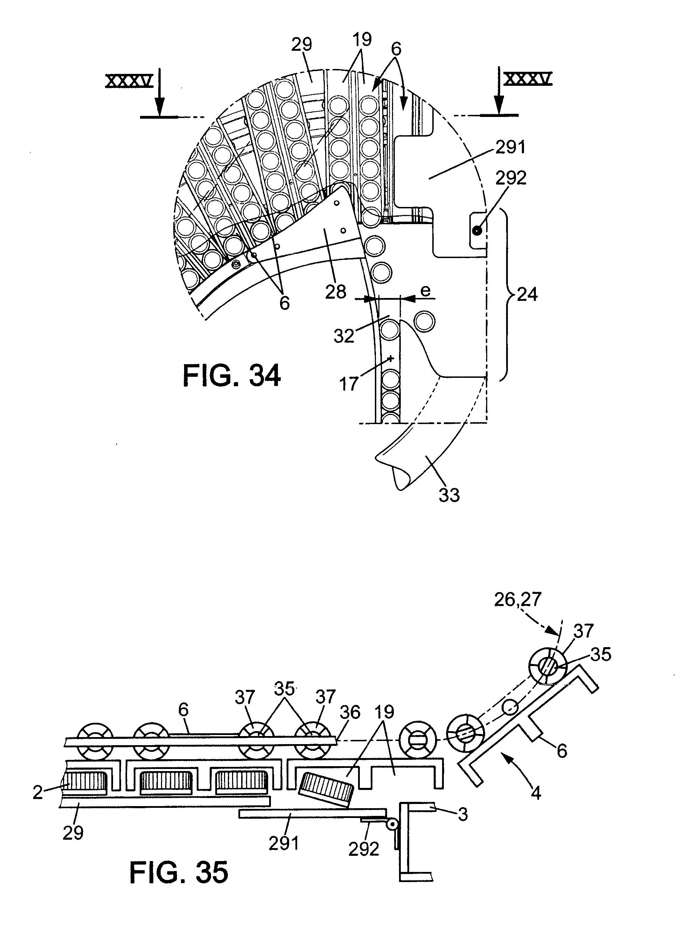

Cette rampe 28 forme une sorte de déversoir et elle se présente sous la forme d'une plaque qui s'insère, comme représenté figure 5, entre la surface supérieure des tasseaux 6 et une paroi constituée d'un panneau 29, de préférence translucide, qui habille la partie supérieure du brin 4a actif du convoyeur 4 entre le poste 21 de sélection et l'extrémité du poste 23 de vidange. Ce panneau 29 retient les objets 2 dans les rainures 19 desdits tasseaux 6, depuis la partie supérieure du poste 21 de sélection, jusqu'à l'extrémité du poste 23 de vidange ou, un peu avant ladite extrémité, comme représenté sur les figures 34 et 35 qui montrent une variante de réalisation.

Selon cette variante, le panneau 29 frontal s'arrête avant l'extrémité du poste 23 de vidange et il se prolonge jusqu'à ladite extrémité dudit poste 23 au moyen d'un petit panneau qui forme une sorte de volet 291. Ce volet 291 constitue un prolongement qui est parallèle au panneau 29 dont il couvre le rebord de son extrémité, et il laisse un jeu plus important entre lui et les objets 2 qui se situent dans les rainures 19 des tasseaux 6.

En effet, les objets 2, du genre bouchons, par exemple, peuvent rester appliqués dans leur rainure 19, sous l'effet de la pression qui est susceptible d'être exercée sur lesdits objets 2 par le panneau 29 frontal, et ceci en raison du très faible jeu qui existe entre ce panneau 29 et lesdits objets 2, et en raison des possibles défauts de planéité dudit panneau 29 mais aussi des défauts de planéité des tasseaux 6.

Le volet 291 permet donc d'introduire un jeu supplémentaire important entre lui et les objets 2, lequel jeu correspond d'ailleurs à l'épaisseur du panneau 29 frontal, ce qui a pour effet de libérer complètement lesdits objets 2 par rapport à leur rainure 19 à partir de l'extrémité dudit panneau 29, lesquels objets 2 tombent alors par simple gravité dans la zone 24 d'accueil et de transit où ils pénètrent dans un by-pass, dont il sera question plus loin, pour être recyclés.

Ce volet 291 peut, avantageusement, être monté sur le châssis 3 de la machine au moyen de charnières 292 qui forment une articulation autour d'un axe vertical, offrant un accès plus facile à cette zone d'extrémité du poste 23 de vidange, pour des opérations de nettoyage et d'entretiens, par exemple.

Le volet 291 s'étend longitudinalement sur une distance qui est, par exemple, de l'ordre de deux à trois fois la largeur des rainures 19 des tasseaux 6 ; sa hauteur correspond à celle du panneau 29 frontal, dans cette zone d'extrémité du poste de vidange, lequel poste 23 est repéré figure 3.

Généralement, les rainures 19 des tasseaux 6 contiennent une moyenne de 5 à 10 objets 2 environ, c'est-à-dire que lesdits objets 2 occupent environ 1/3 à 2/3 de la longueur des rainures 19.

On peut toutefois prévoir à la partie supérieure du poste 23 de vidange, c'est-à-dire à l'extrémité supérieure des tasseaux 6, dans le rail 27 et la paroi 11, une zone 30 ouverte pour, éventuellement, si par extraordinaire la rainure 19 était totalement pleine en sortie du poste 21 de tri, permettre une évacuation des deux ou trois objets 2 qui seraient en surplus du fait de leur remontée dans ladite rainure 19, à cause de la rampe 28.

La rampe 28 permet de mettre en charge le train d'objets 2, c'est-à-dire de lui conférer une énergie potentielle qui est exploitable pour permettre à ce train d'objets 2 de prendre de la vitesse avant de commencer à quitter sa rainure 19. On obtient ainsi une sorte d'avance à l'éjection et une vitesse initiale qui permet de diminuer la distance, mesurée selon le sens d'avancement du convoyeur 4, qui sépare le point de passage du premier objet 2, lorsqu'il quitte sa rainure 19, du point de passage du dernier objet 2 quittant la même rainure 19.

Pour réduire cette distance le plus possible, un guide 31 est aménagé à partir du point haut de la rampe 28, jusqu'à l'entrée 32 de la première portion de la goulotte 17. Ce guide 31 présente une surface de glissement courbe de forme parabolique, qui tient compte de la vitesse d'avancement V du convoyeur à tasseaux et de l'accélération de la pesanteur. On obtient ainsi un mouvement vers l'avant, c'est-à-dire dans le même sens que le sens d'avancement du convoyeur 4, pour les objets 2 qui sont en tête du train. La courbe est même, de préférence, définie de telle façon que chaque objet est décalé légèrement vers l'arrière, par rapport au sens d'avancement du convoyeur, et par rapport à l'objet qui le précède directement.

On obtient ainsi lors de la vidange des tasseaux 6, des trains d'objets 2 qui restent parfaitement équilibrés et, en particulier, qui forment une colonne en forme de chenille quasiment verticale, évitant les désordres entre lesdits objets et en particulier les objets en queue de train.

La hauteur de la rampe 28 est de l'ordre de deux fois la largeur des rainures 19 du tasseau 6.

Les objets 2 sont maintenus en place dans leurs rainures 19 grâce au panneau 29 frontal qui s'étend longitudinalement au-delà du guide 31, sur une distance qui est de l'ordre de deux fois la largeur des rainures 19 de tasseaux 6.

Lorsqu'ils quittent la rainure 19 de leur tasseau 6, les objets 2 pénètrent dans la zone 24 d'accueil et de transit qui forme une sorte d'embouchure pour la goulotte 17 de prise en charge.

On observe, grâce à l'aménagement de la rampe 28 et du guide 31, un agencement parfait du train d'objets 2 et une orientation précise de ce train vers l'entrée 32 de la goulotte 17 de prise en charge qui amène lesdits objets 2 au dispositif 15 de convoyage. Des objets 2 peuvent être orientés vers un trop-plein qui comprend un conduit 33 de recyclage, lequel conduit 33 prend naissance au niveau de l'entrée 32 de la goulotte 17 et il permet de renvoyer tous les objets 2 qui n'ont pas réussi à entrer dans ladite goulotte 17, vers la trémie 1.

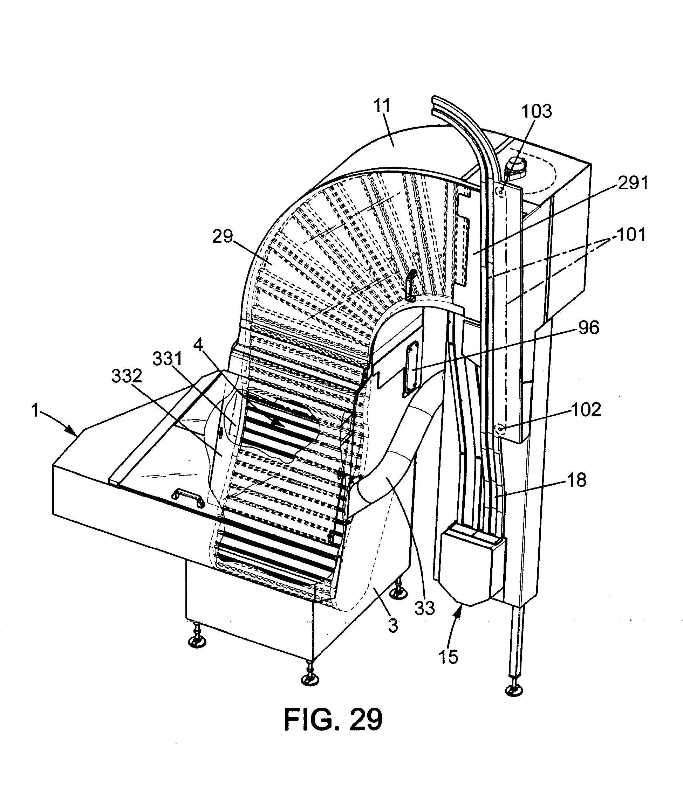

De préférence, comme représenté figure 29, le conduit 33 introduit les objets 2 au niveau du poste de chargement, dans la chambre 331 de brassage qui se situe à la partie inférieure du convoyeur 4, entre ce dernier et une paroi 332 qui délimite la trémie 1 du côté dudit convoyeur 4, isolant les tasseaux 6 dudit convoyeur 4 par rapport au stock d'objets 2 contenus dans ladite trémie 1. Cette paroi 332 s'étend devant le convoyeur 4, parallèlement à sa partie inférieure, à une distance de ce dernier qui permet le passage des objets 2 qui n'ont pas franchis le dos d'âne 13 et qui permet d'accueillir les objets recyclés en provenance du trop-plein.

L'entrée 32 de la goulotte 17, peut être légèrement plus large que le diamètre des objets 2. Cette entrée 32 peut avoir une largeur e, comme représentée figure 34, qui est de l'ordre de 1,5 fois la largeur des rainures 19 des tasseaux 6, mais de préférence elle correspond à 1,5 fois le diamètre desdits objets 2.

A titre indicatif, le convoyeur 4 à tasseaux 6 avance avec une vitesse de l'ordre de 0,25 mètre par seconde.

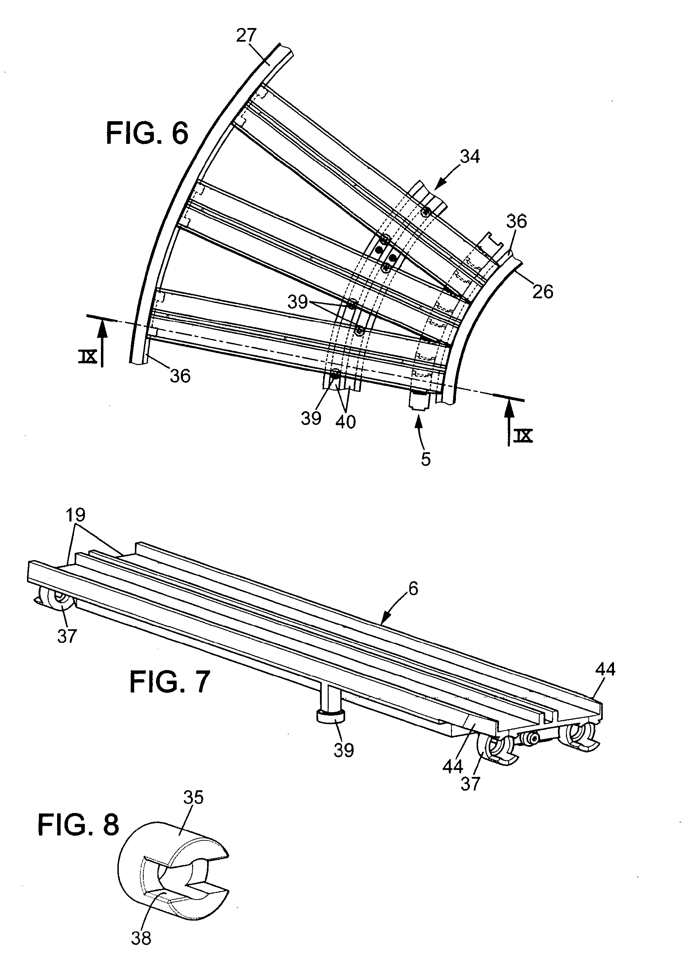

Les figures 6 à 10 montrent, d'une façon plus détaillée, les tasseaux 6 du convoyeur 4 et en particulier leur aménagement pour accueillir les objets 2 et, surtout, pour réaliser leur guidage par rapport au châssis 3 général de la machine d'apprêt et, notamment, par rapport aux rails 26 et 27 de guidage.

La figure 6 montre trois tasseaux 6 disposés en éventail, comme ils le sont au niveau du poste de préparation 22. Ces tasseaux 6 sont guidés au niveau de leurs extrémités par des rails 26 et 27 qui sont portés par le châssis 3 et, en particulier, par les parois 10 et 11, respectivement. Ces rails 26, 27 latéraux maintiennent les tasseaux 6 dans leur plan de travail, c'est-à-dire pour la portion active du convoyeur 4, dans un plan qui est sensiblement vertical.

Ces tasseaux 6 sont également guidés au moyen d'un rail 34, lequel rail 34 se situe entre les rails 26 et 27 latéraux et il fait office de came pour imposer auxdits tasseaux 6 une certaine orientation et, en particulier, au poste 22 de préparation, pour les faire pivoter et les placer en éventail.

La figure 7 montre, en perspective, un tasseau 6. Ce tasseau 6 se présente sous la forme d'une plaque allongée qui comporte, sur sa face visible, deux rainures 19, lesquelles rainures 19 ont une largeur qui est adaptée à la taille des objets 2.

Ce tasseau 6 comporte, à ses extrémités, des moyens de guidage qui coopèrent avec les rails 26, 27 latéraux. Ces moyens de guidage sont constitués de plots 35 disposés aux angles de chaque tasseau 6, lesquels plots 35 coopèrent, de chaque côté du tasseau 6, avec une languette 36 qui s'étend en saillie, sur chaque rail 26, 27, latéral.

Ces plots 35 se présentent sous la forme de petits cylindres et ils sont disposés dans des logements 37, de forme correspondante, aménagés aux quatre coins du tasseau 6. Les logements 37 sont ouverts sur leurs côtés pour permettre le passage de la languette 36, laquelle languette 36 glisse dans une fente 38 qui est aménagée dans l'axe des plots 35.

Les plots 35 tournent autour de leur axe, dans leur logement 37 cylindrique, pour suivre le chemin tracé par la languette 36 correspondante ; un chemin qui peut être rectiligne ou courbe, notamment aux extrémités du convoyeur 4.

On remarque, toujours figure 7, la présence d'un galet 39. Ce galet 39 coopère avec le rail 34 en forme de came et plus particulièrement avec l'une des deux gorges 40 aménagées sur ce rail 34. En effet, chaque tasseau 6 comporte deux galets 39 suiveurs, visibles notamment figure 6. Ces galets 39 suiveurs coopèrent chacun avec l'une des gorges 40 aménagées dans le rail 34. Ces galets 39 sont disposés sur les rebords du tasseau 6 ; ils sont décalés l'un par rapport à l'autre dans le sens longitudinal dudit tasseau 6 pour permettre l'obtention d'un entraxe maximum entre deux galets 39 d'un même tasseau 6 afin d'obtenir un guidage le plus précis possible de ces tasseaux 6 sur le rail 34. Ce décalage longitudinal des galets 39 d'un même tasseau 6 permet de placer les galets de deux tasseaux 6 adjacents en interférence, c'est-à-dire que le galet 39 d'un tasseau 6 s'étend, en partie, sous le tasseau 6 adjacent et vice-versa.

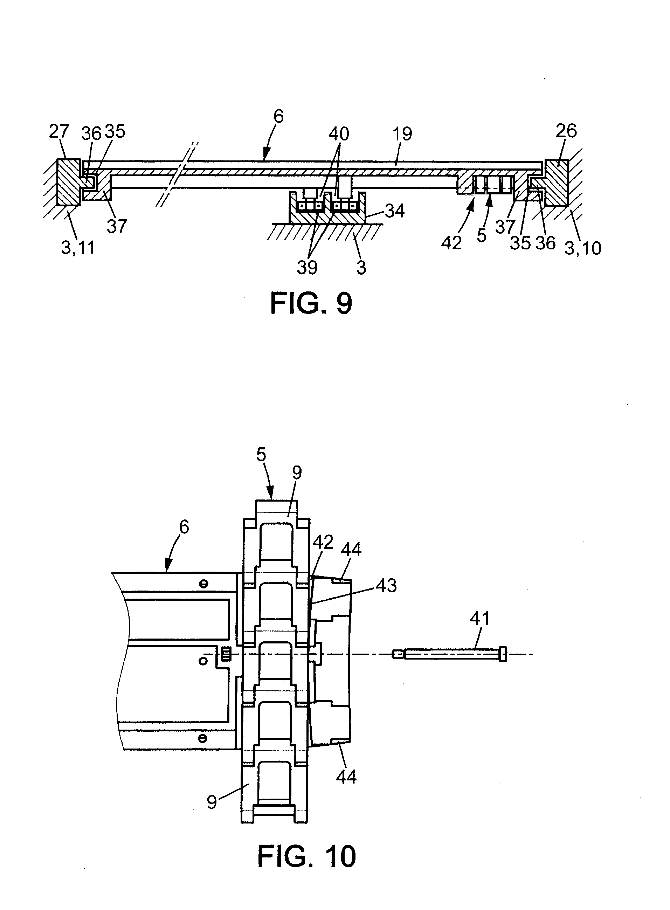

La figure 9 montre, en coupe, un tasseau 6 qui est guidé à ses extrémités dans les rails 26 et 27, lesquels rails sont solidaires du châssis 3 de la machine, de même que le rail 34.

La figure 10 est une vue partielle de la face cachée d'un tasseau 6 montrant une portion de la chaîne 5 qui réalise l'assemblage des tasseaux 6 entre eux et qui en même temps, permet l'entraînement desdits tasseaux 6. Cette chaîne 5 est constituée de maillons 9 et la longueur de chaque maillon 9 est de l'ordre du tiers de la largeur d'un tasseau 6. Le maillon 9 central est fixé au tasseau 6 au moyen d'une broche 41 qui s'étend dans le sens de la longueur dudit tasseau 6.

La chaîne 5 est aménagée pour s'inscrire en courbe elle aussi, en particulier au niveau du poste de préparation 22. Elle est insérée dans un évidement 42 aménagé sous la surface active du tasseau 6, lequel évidement 43 comporte, du côté interne, une paroi 43 courbe qui permet d'accompagner le mouvement de la chaîne 5 lorsqu'elle aborde la courbe du poste 22 de préparation.

Pour permettre l'inclinaison des tasseaux 6 les uns par rapport aux autres, les extrémités 44 des tasseaux 6 comportent, côté chaîne, une découpe latérale en biseau. Cette découpe en biseau s'étend à partir de l'axe médian longitudinal de la chaîne 5 et elle permet aux tasseaux 6 adjacents de basculer sans exercer de traction sur la chaîne 5. En fait, dans les portions rectilignes du chemin desdits tasseaux 6, ces derniers peuvent rester en contact, aboutés les uns aux autres, afin d'éviter tout risque d'incrustation accidentelle d'objets 2 entre deux tasseaux 6 consécutifs.

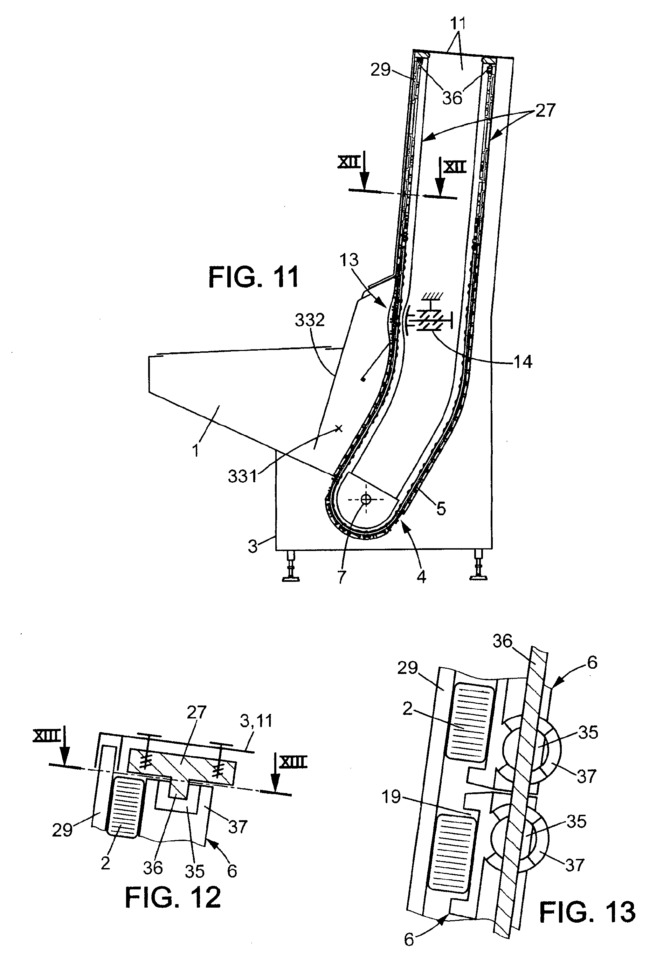

La figure 11 est une vue de côté, en coupe, de la machine d'apprêt. On retrouve, posée sur le châssis 3, la trémie 1 et, représenté partiellement au niveau de la trémie, le convoyeur 4 qui est guidé par les rails 27 latéraux qui portent et orientent les tasseaux 6 dudit convoyeur 4, sur toute sa périphérie.

A la partie inférieure, les tasseaux 6 du convoyeur 4 s'enroulent autour de l'axe 7 qui est horizontal, sur une portion semi-cylindrique au moyen de leurs plots 35 de guidage qui coopèrent avec les rails latéraux, d'un côté le rail 26 et, de l'autre, le rail 27.

Au-dessus du niveau supérieur de la trémie 1, on retrouve le dos d'âne 13 dont la courbe est réglée au moyen du système 14 du type vis-écrou qui agit d'ailleurs directement sur les rails 26 et 27. Ces rails 26 et 27, tout comme le rail 34 sont, de préférence, réalisés en matériau thermoplastique du genre acétal.

Entre le dos d'âne 13 et la partie supérieure du châssis 3, on trouve le panneau 29 qui permet de maintenir les objets 2 en position dans les rainures 19 des différents tasseaux 6. Ce panneau 29 est visible sur les figures 11 à 13.

La figure 12 montre le détail du guidage de l'extrémité d'un tasseau 6 sur le rail 27 latéral. Ce rail 27 latéral est solidaire du châssis 3 de la machine et il coopère, au moyen de sa languette 36, avec le plot 35 qui est mobile, articulé dans son logement 37 sur le tasseau 6. Ce tasseau 6 véhicule un objet 2 qui est maintenu en place par le panneau 29, lequel panneau 29, comme mentionné précédemment, est de préférence un panneau translucide.

La figure 13 montre les objets 2 qui sont pris en sandwich entre les rainures 19 des tasseaux 6 et le panneau frontal 29. Les tasseaux 6 sont guidés sur la languette 36 du rail 27 au moyen des plots 35 qui se situent aux extrémités latérales, dans les coins, desdits tasseaux 6. On remarque, sur cette figure 13, le logement 37 dans lequel est inséré le plot 35, lequel plot 35 tourne dans son logement 37 pour suivre la direction de la languette 36.

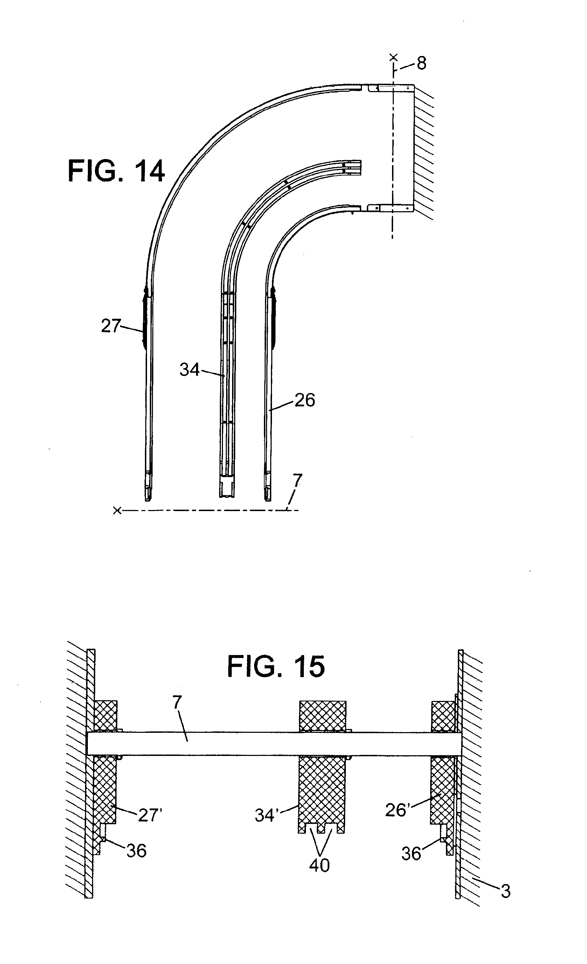

La figure 14 montre, en vue de face, les rails 26 et 27 latéraux et le rail 34 central. Ces différents rails ont un parcours qui, vu de face, est en forme de crosse et ils réalisent le guidage des tasseaux 6 du convoyeur 4. Le parcours de guidage comporte une première portion rectiligne sensiblement verticale qui correspond au poste 20 de chargement et au poste 21 de sélection, laquelle première portion est suivie d'une portion en courbe qui correspond au poste 22 de préparation des objets 2 et ledit parcours se termine par une portion rectiligne horizontale qui correspond au poste 23 de vidange.

A l'extrémité inférieure des rails 26, 27 et 34, on retrouve l'axe 7, lequel axe 7 porte des demi-flasques qui reçoivent les extrémités desdits rails 26, 27 et 34, aussi bien les rails du brin 4a actif du convoyeur 4 que les rails du brin 4b inactif.

Ainsi, comme représenté figure 15, on trouve, sur l'axe 7, un flasque 34' muni des gorges 40 qui assurent la continuité des rails 34 et, par voie de conséquence, la continuité de la fonction guidage et maintien des tasseaux 6 dans une orientation et une position précises.

La continuité du rail 26 est assurée par un flasque 26' latéral, lequel flasque 26' comporte également la languette 36 qui coopère avec les plots 35. De l'autre côté, on trouve le flasque 27' qui offre les mêmes prestations que le flasque 27 ; ce flasque 27' prolonge les rails 27 et il comporte, lui aussi, la languette 36 de guidage des plots 35.

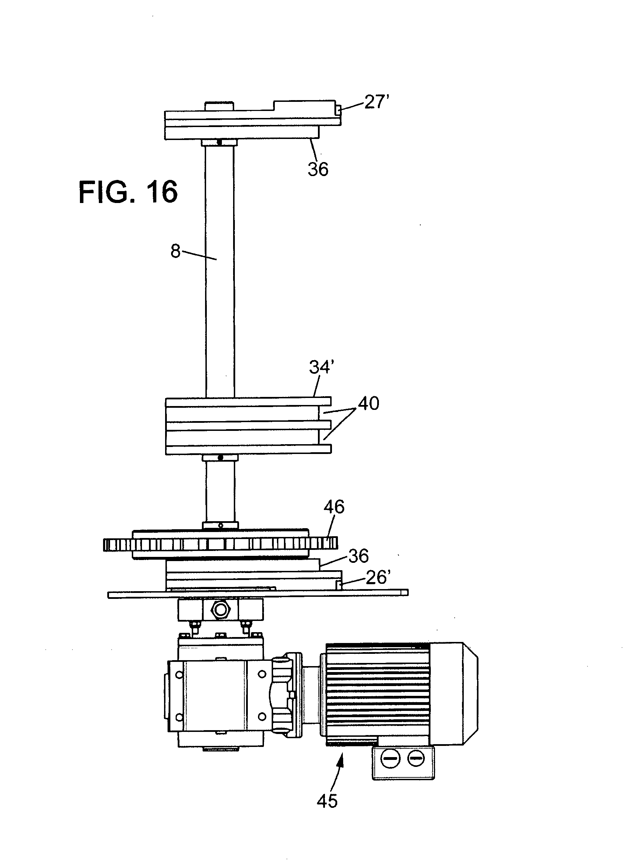

La figure 16 montre l'aménagement de l'axe 8 vertical qui constitue l'axe moteur du convoyeur 4. Les moyens d'entraînement de ce convoyeur 4 sont constitués d'un motoréducteur 45, lequel motoréducteur est solidaire du châssis 3 et, en particulier de la paroi 10, et il entraîne une roue dentée 46, qui coopère avec la chaîne 5 sur laquelle sont assemblés les différents tasseaux 6.

Sur cet axe 8, on retrouve des flasques 26' et 27' qui correspondent au prolongement des rails 26 et 27 latéraux respectivement. On trouve également le flasque 34' qui prolonge le rail 34 et qui comporte, lui aussi, les rainures 40 de guidage des galets 39 associés aux différents tasseaux 6.

Comme représenté figure 17, le module 16 de propulsion et de sélection des objets 2 comprend un canal 50 en arc de cercle, avec une forme en U, qui s'étend entre la goulotte 17 d'amenée et la goulotte 18 d'élévation. Une roue 51 munie d'encoches 52 sur sa périphérie s'inscrit pour partie dans ce canal 50 qui constitue un canal de transit entre les deux goulottes 17 et 18.

Les encoches 52 de la roue 51 sont aptes à capter individuellement chacun des objets 2 transportés par la goulotte 17 d'amenée. Le déplacement des objets 2 dans le canal 50 de transit est associé à la rotation de la roue 51 et à la présence des encoches 52 qui captent chaque objet 2. Ainsi, chaque objet 2 qui est pris en charge par une encoche 52 est propulsé dans le canal 50 de transit et jusqu'à l'extrémité supérieure de la goulotte 18 d'élévation.

La goulotte 18 d'élévation est, de préférence, constituée de tronçons, non représentés, qui permettent d'ajuster, selon les besoins, la hauteur de livraison des objets 2, comme décrit dans le document FR 2 876 991 précité.

La goulotte 17 d'amenée, qui guide les objets 2, peut présenter une portion verticale s'étendant au-dessus du canal 50. La portion verticale de cette goulotte 17 d'amenée est apte à guider les objets 2 sur une file unique. Ainsi les objets 2 délivrés par la machine d'apprêt s'entassent les uns sur les autres pour constituer un stock tampon en amont de la roue 51 à encoches, sur une hauteur qui est de l'ordre de 1 m environ. La goulotte 17 fait office de goulotte d'accumulation des objets 2 et de goulotte de gavage de la roue 51 à encoches.

Lorsqu'un objet 2 est entraîné par la roue 51 à encoches, il pousse en bloc l'ensemble des objets contenus dans la goulotte 18 d'élévation. L'entraînement positif des objets 2 par la roue 51 à encoches et la résistance mécanique de chacun desdits objets 2 permettent de faire monter des objets 2 dans la goulotte 18 d'élévation au moins jusqu'à l'entrée de la goulotte d'alimentation du poste de bouchage, non représenté. Le dispositif 15 de convoyage permet d'élever les objets 2 sur une grande hauteur de manière silencieuse et fiable ; lequel dispositif 15, avec sa roue 51 à encoches, se comporte comme une pompe pour un flux d'objets 2 sensiblement rigides.

La goulotte 17 d'amenée, la goulotte 18 de sortie, le canal 50 de transit et la roue 51 à encoches sont symétriques par rapport au plan vertical médian de la figure 17. La partie de gauche de la figure 17 est une vue partielle de face ; la partie de droite est une coupe selon 17-17 de la figure 18.

Une paroi 53 de fond s'étend sur toute la largeur du module 16, depuis la goulotte 17 de gavage jusqu'à la goulotte 18 d'élévation, faisant office de bâti pour l'ensemble dudit module 16.

La goulotte 17 d'amenée et la goulotte 18 d'élévation présentent chacune : une paroi 54 latérale intérieure et une paroi 55 latérale extérieure, ainsi qu'une paroi 56 frontale qui s'étend en avant des goulottes 17 de gavage et 18 d'élévation ; parallèlement à la paroi 53 de fond. Ces goulottes 17 et 18 présentent une section droite rectangulaire constituée par les différentes parois ci-après : la paroi 53 de fond et la paroi 56 frontale qui sont parallèles entre elles, ainsi que les parois 54 et 55 latérales qui sont également parallèles entre elles. La section droite des goulottes 17 et 18 correspond à l'encombrement d'un objet 2 normalement constitué.

Pour gérer le fonctionnement de la roue 51 à encoches, la goulotte 17 d'amenée comporte un système de contrôle de présence d'objets 2, en forme de capteur 57, lequel capteur 57 donne ses informations à un automate 58 qui gouverne toute l'installation.

La roue 51 à encoches est entraînée en rotation autour d'un axe 59 d'entraînement.

Une pluralité de doigts 60 est également entraînée en rotation avec la roue 51 à encoches. Chaque doigt 60 a pour fonction d'accompagner les objets 2 dans le canal 50 et de maintenir chacun d'eux dans l'encoche 52 qui l'a pris en charge. Au cours de son mouvement circulaire, avec la roue 51 à encoches, chaque doigt 60 se rapproche ou s'éloigne de la paroi 53 de fond du module 16.

Le canal 50 de guidage est délimité par la paroi 53 de fond et par la paroi 56 qui fait office de glissière pour les objets 2 et cette glissière ne couvre que la partie externe périphérique dudit canal 50 pour permettre le passage des doigts 60. Cette paroi 56 frontale ferme le canal 50 au niveau des goulottes 17 et 18 sans occulter la totalité dudit canal 50 de guidage. Cela permet donc à chaque doigt 60 de pouvoir coopérer avec un objet 2 positionné dans l'encoche 52 qui correspond audit doigt 60.

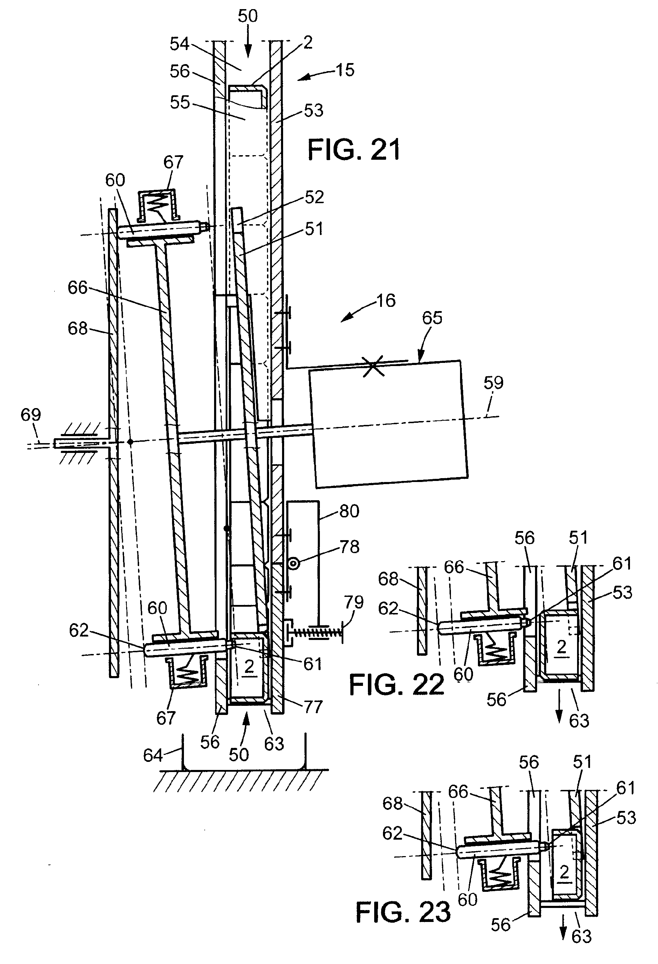

Le mécanisme permettant l'entraînement des objets 2 et le déplacement axial des doigts 60 de maintien sera détaillé aux figures 21 à 25.

Comme illustré figures 18 et 19, le doigt 60 de maintien occupe une position variable par rapport aux objets 2 de façon à placer chacune de ses extrémités 61 et 62 dans des positions qui lui permettent d'être actif ou inactif selon le cas, comme détaillé plus loin.

Figure 18, le doigt 60 est représenté dans une position de retrait par rapport au rebord supérieur de l'objet 2 ; ledit objet 2 n'est pas encore capté par l'encoche 52 correspondante. En revanche, lorsque l'encoche 52 enserre l'objet 2 correspondant, figure 19, ce dernier est entraîné en translation le long du canal 50 de transit. Le doigt 60 de maintien correspondant affleure avec le rebord de l'objet 2.

Comme représenté figure 17, le module 16 est aménagé pour offrir un secteur angulaire A au cours duquel l'extrémité 61 du doigt 60 de maintien pénètre dans le creux de l'objet 2 correspondant qui est correctement orienté. Dans ce secteur angulaire A, le doigt 60 contrôle, de ce fait, la bonne orientation et/ou la bonne conformité dudit objet 2 correspondant.

La paroi 55 latérale extérieure du canal 50 est interrompue sur un secteur angulaire F qui est plus petit que le secteur angulaire A. Autrement dit, le canal 50 de guidage présente une fenêtre 63 d'éjection située en partie basse du module 16. De préférence, l'angle du secteur F angulaire d'éjection est compris entre 40° et 80°. Le secteur angulaire A de guidage contrôlé est plus grand que le secteur angulaire F d'éjection ; il s'étend de part et d'autre du secteur angulaire F d'éjection sur un angle latéral supplémentaire suffisant pour laisser aux doigts 60 le temps de pénétrer le creux de l'objet 2 correspondant ; ce secteur est, par exemple, compris entre 90° et 180°.

Autrement dit, lorsqu'un objet 2, transitant le long du canal 50 arrive en regard de la fenêtre 63 d'éjection, celui-ci n'est plus guidé par la paroi 55 latérale extérieure mais il est pris en charge uniquement par le doigt 60 de maintien correspondant. Si l'objet 2 présente un défaut d'orientation, il est alors possible d'escamoter le doigt 60 de maintien pour faire tomber ledit objet 2 défectueux sous l'effet de son propre poids à travers la fenêtre 63 d'éjection, dans un bac 64 de récupération posé à même le sol, par exemple.

Le doigt 60 sert à détecter un défaut et sert également de remède lorsqu'un défaut est détecté. Ce doigt 60 est à la fois un palpeur de détection de défaut et un moyen de maintien escamotable.

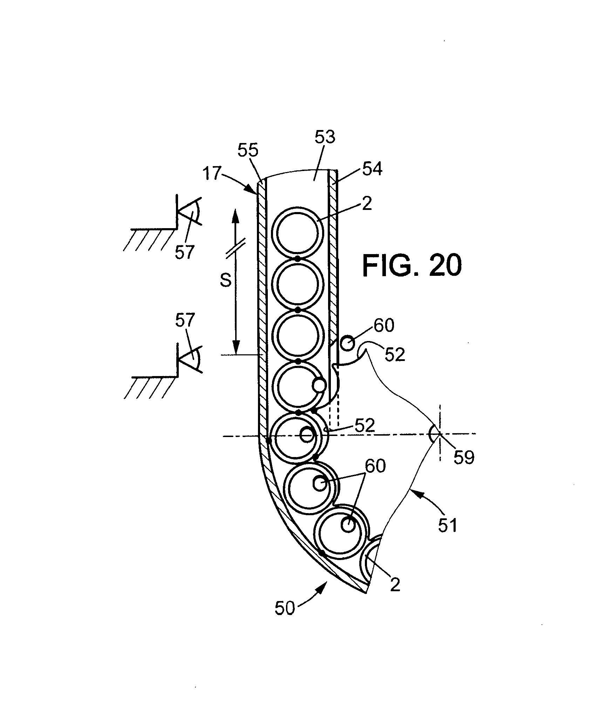

On va, à l'aide de la figure 20, décrire l'entrée du canal 50 et la synchronisation entre la rotation de la roue 51 à encoches 52 et l'arrivée des objets 2. Pour éviter qu'un objet 2 ne se retrouve coincé à l'entrée, l'invention propose un moyen simple de synchronisation consistant à garantir que les objets 2 situés dans la zone d'entrée du canal 50 sont de manière systématique inclus dans une file d'objets 2 en contact successivement l'un avec l'autre. La file continue d'objets, s'étendant depuis un objet 2 déjà capté par une encoche 52 jusqu'à un ou plusieurs objets 2 situés dans une portion terminale de la goulotte 17 d'amenée, constitue un stock tampon S.

L'objet 2 voit sa position le long du canal 50 de guidage entièrement déterminée par l'encoche 52 qui l'accueille. Autrement dit, au moment de son arrivée dans le canal 50, chaque objet 2 se situe, sans risque de coincement, entre un contact avec la dent de l'encoche 52, un contact avec la paroi 55 latérale extérieure et un contact avec l'objet 2 qui arrive.

Dans l'exemple illustré figure 20, la portion terminale de la goulotte 17 d'amenée s'étend verticalement au-dessus de l'objet 2 déjà capté par l'encoche 52, de sorte que l'ensemble du poids des objets 2 du stock tampon est retenu également par ladite encoche 52. Les objets 2 de la goulotte 17 d'amenée du canal 50 ont ainsi leur position qui est synchronisée avec la rotation de la roue 51 à encoches.

Un stock tampon est maintenu dans la goulotte 17 d'amenée, sous le contrôle du ou des capteurs 57, sur une hauteur S de l'ordre de 1 m environ.

De manière alternative, la portion terminale de la goulotte 17 d'amenée ainsi que la zone d'entrée du canal 50 pourraient être simplement inclinées par rapport à l'horizontale.

Pour mieux maîtriser la position des objets 2 dans la zone d'entrée du canal 50, la paroi 54 latérale intérieure présente une prolongation s'étendant en arrière de la roue 51 à encoches jusqu'à ce que l'objet 2 ainsi guidé latéralement soit entièrement capté par une encoche 52.

Les figures 21 à 25 montrent, de façon plus détaillée, le système de sélection et de tri des objets 2.

L'axe 59 d'entraînement de la roue 51 à encoches est situé dans le plan de symétrie du module 16 et il est incliné par rapport à la normale à la paroi 53 de fond d'un angle compris entre 1° et 10° et de préférence entre 2° et 5°. L'angle d'inclinaison de l'axe 59 d'entraînement est orienté à la fois vers l'avant et vers le bas du module 16.

Dans le canal 50 de transit, chaque objet 2 glisse axialement dans son encoche 52 entre le moment où ladite encoche le prend en charge à l'extrémité inférieure de la goulotte 17 d'amenée et le moment où il passe devant la fenêtre 63 d'éjection, et il glisse ensuite, dans l'autre sens, jusqu'au moment où son encoche 52 le largue dans la goulotte 18 d'élévation.

Le module 16 de propulsion et de sélection comprend un mécanisme d'entraînement des doigts 60 de maintien. Ce mécanisme d'entraînement est constitué :
- d'un moteur 65 d'entraînement qui est solidaire de la paroi 53 de fond, et,
- d'un flasque 66 qui est fixé à distance de la roue 51 à encoches, sur l'axe 59 d'entraînement.

Le moteur 65 est commandé par l'intermédiaire de l'automate 58, en tenant compte des informations données par le système de contrôle, et en particulier le ou les capteurs 57 qui surveillent le niveau des objets 2 dans la goulotte 17 d'amenée.

Les différents doigts 60 de maintien sont portés par le flasque 66, guidés selon une direction qui est parallèle à l'axe 59 d'entraînement et ces doigts 60 sont répartis tout autour de la roue 51 à encoches en regard de chacune desdites encoches 52.

Pour chaque doigt 60 de maintien, le flasque 66 est équipé d'un mécanisme du type bistable à ressort 67, lequel ressort 67 pousse le doigt 60 de maintien soit dans une position stable active de maintien des objets 2 pour laquelle l'extrémité 61 dudit doigt 60 est positionnée vers l'arrière du module 16, comme illustrée figure 21, soit vers une position stable inactive, illustrée figure 22, où l'extrémité 62 dudit doigt 60 est positionnée vers la partie frontale dudit module 16.

Chacun des doigts 60 comporte une extrémité 61 de maintien, située vers la paroi 53 de fond, apte à pénétrer dans le creux d'un objet 2 correctement orienté lorsque ledit doigt 60 de maintien se situe dans le secteur angulaire A de maintien, illustré à la figure 17.

L'ensemble des extrémités 61 actives de chacun des doigts 60 de maintien définit un cercle de référence qui est coaxial à l'axe 59 d'entraînement. Ce cercle de référence coupe la surface de glissement de la paroi 56 frontale du canal 50 selon une ligne qui se situe au-dessus du niveau de la fenêtre 63 d'éjection et cette ligne définit le secteur angulaire A de maintien et d'accompagnement des objets 2 grâce à l'action des doigts 60.

Comme illustré figure 22, l'objet 2 qui est mal orienté repousse le doigt 60 vers l'avant du dispositif 15 (c'est-à-dire vers la gauche sur la figure 22). Le mécanisme bistable à ressort 67, qui est interposé entre le flasque 66 et le doigt 60, entraîne automatiquement ledit doigt 60 de maintien correspondant vers une deuxième position stable, mais inactive. Dans la position stable inactive, l'extrémité 61 active du doigt 60 de maintien ne se plaque plus sur le fond de l'objet 2 défectueux de sorte que cet objet 2 défectueux tombe sous l'effet de son propre poids, passant à travers la fenêtre 63 d'éjection.

L'absence d'accès à la zone creuse de l'objet 2 peut également résulter d'un autre type de défaut tel qu'un voile de plastique occultant partiellement ou totalement ladite zone creuse dudit objet 2. L'objet 2 défectueux peut également, comme représenté figure 23, être un bouchon sans sa bague d'inviolabilité ou encore être un objet plein résultant d'un moulage sans noyau. Autrement dit, le moyen de tri permet de tester l'existence d'une zone creuse correctement orientée pour chaque objet 2.

Le moyen de tri apporte un critère supplémentaire de tri distinct du critère réalisé par la machine d'apprêt dont le critère de tri est exclusivement dépendant de la position du centre de gravité des objets 2. La combinaison successive de mécanismes de tri selon des critères de tri différents et complémentaires permet de réduire fortement les niveaux de pannes des boucheuses dus à des défauts d'alimentation de bouchons.

Les doigts 60 de maintien présentent chacun une deuxième extrémité 62, opposé à l'extrémité 61, laquelle extrémité 62 est située du côté avant, ou frontal, du module 16. Lorsque le doigt 60 de maintien est dans la position stable active, comme illustrée figure 21, l'extrémité 62 évolue le long d'un deuxième cercle de référence. Lorsque le doigt 60 est dans la position stable inactive, illustrée figure 22, c'est-à-dire quand il est avancé vers l'avant du module 16, le cercle de ces extrémités 62 se déplace vers l'avant du module 16.

Le moyen de tri comprend également une came 68 de réarmement apte à ramener les doigts 60 de maintien situés hors du secteur angulaire de la fenêtre 63 d'éjection, depuis la position stable inactive illustrée figure 22 jusqu'à la position stable active illustrée figure 21.

La came 68 de réarmement se présente sous la forme d'un disque qui est parallèle au plan de la paroi 53 de fond du canal 50 de guidage. La came 68 de réarmement est mobile en rotation autour d'un axe 69 qui est solidaire de la paroi 53 de fond et cet axe 69 passe par le centre du cercle de référence des extrémités 62 des doigts 60. Ce cercle de référence des extrémités 62, lorsque les doigts 60 sont en position active de maintien des objets 2, est sensiblement écarté, et, à la limite, il est tangent à la came 68 de réarmement. Mais lorsqu'un doigt 60 de maintien a basculé dans la deuxième position stable, inactive, en raison d'un objet 2 défectueux, le cercle de référence de l'extrémité 62 de ce doigt 60 escamoté coupe le plan de la came 68 et ledit doigt escamoté est progressivement ramené en position active. La pression de l'éventuel doigt 60 escamoté suffit à entraîner la came 68 de réarmement en rotation. Une telle came 68 de réarmement présente l'avantage de ne pas générer de frottement pour ramener le doigt 60 de maintien dans sa position stable active.

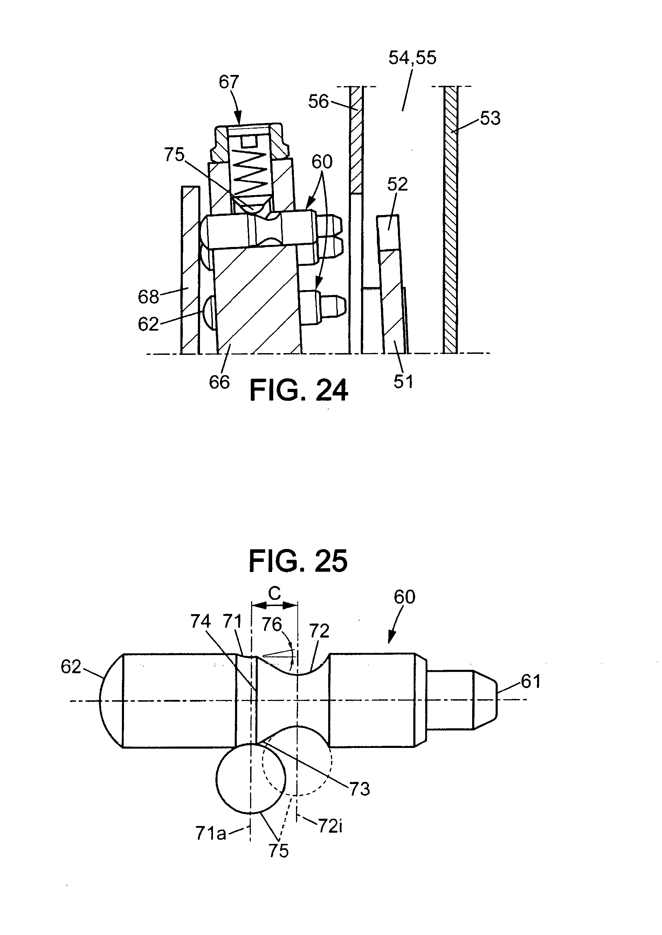

Comme illustré figure 25, chacun des doigts 60 de maintien a une forme de révolution. Le doigt 60 présente une première portée 71 de bille et une deuxième portée 72 de bille, chacune de forme torique coaxiale à l'axe dudit doigt 60. Le diamètre intérieur de la deuxième portée 72 torique est inférieur au diamètre intérieur de la première portée 71 torique.

Une surface 73 de raccordement conique est tangente à la deuxième portée torique 72 et présente une arête 74 de raccordement avec la première portée 71 torique. L'arête 74 de raccordement présente un diamètre légèrement supérieur au diamètre du fond de la première portée 71 torique. Le mécanisme à ressort 67 pousse une bille 75 au fond de la première portée 71 torique. Cette position correspond à la position stable active du doigt 60 ; cette position est stable en raison du léger bourrelet que présente l'arête de raccordement 74. Dans cette position stable, la bille 75 est positionnée dans un plan 71a qui est perpendiculaire à l'axe du doigt 60. De même, en position stable inactive, la bille 75 est positionnée dans un plan 72i qui est perpendiculaire à l'axe du doigt 60 et la distance entre les deux plans 71a et 72i correspond à la course C dudit doigt 60 entre ses deux positions stables.

L'arête 74 de raccordement circulaire est située dans un plan qui est situé entre les plans 71a et 72i, à une distance du plan 71a de la première portée 71 de bille comprise entre 0,25 et 1,2 mm et de préférence comprise entre 0,5 et 1 mm. La course C est de l'ordre de 4 mm.

Lorsqu'un objet 2 défectueux pousse l'extrémité 61 du doigt 60 sur une distance axiale supérieure à la distance précitée entre l'arête 74 de raccordement et le plan 71a, la bille 75 roule le long de la surface 73 conique et tire ledit doigt 60 de maintien vers la gauche de la figure 25 jusqu'à ce que ladite bille 75 tombe au fond de la deuxième portée 72 torique.

Pour le réarmement, la came 68 pousse l'extrémité 62 du doigt 60 de maintien sur une distance axiale supérieure à la distance entre le fond de la deuxième portée 72 et l'arrête 74 de raccordement. La bille 75 comprime alors le mécanisme à ressort 67 et, lorsque le bourrelet que représente l'arrête 74 de raccordement est dépassé, la bille 75 retombe au fond de la première portée 71 torique et retrouve la première position stable du doigt 60 de maintien.

Le bourrelet que constitue l'arête 74 de raccordement présente, du côté de la première portée 71 torique, une pente 76 faisant un angle de quelques degrés seulement. Par exemple, la pente 76 présente un angle compris entre 1° et 10° et de préférence compris entre 4° et 6°. Ainsi, le doigt 60 de maintien et le mécanisme à ressort 67 constituent un palpeur bistable dissymétrique avec un effort de déclenchement très réduit. Un simple voile occultant partiellement le creux d'un objet 2 suffit à repousser l'extrémité 61 du doigt 60 avec un effort faible mais suffisant pour que la bille 75 remonte la pente 76 et que ledit doigt 60 bascule dans la position stable inactive où la bille 75 est au fond de la deuxième portée 72 de bille. Un tel mécanisme de came est apte à être sensible à des efforts réduits et donc sensible à un défaut faible sur les objets 2 et ceci malgré des cadences très élevées du dispositif 15 de sélection et de convoyage.

La figure 21 montre également, sous une forme schématique, un aménagement de la partie inférieure de la paroi 53 de fond pour permettre la vidange du canal 50 et, en particulier, permettre le retrait des objets qui sont maintenus par les doigts 60 et, éventuellement, ceux qui sont dans les goulottes d'amenée et d'élévation.

La paroi 53 de fond comporte un panneau 77 qui est mobile ; ce panneau 77 est, par exemple, monté basculant au moyen d'une charnière 78 et il est actionné par un organe de manoeuvre approprié comme une simple vis 79 qui est interposée entre ledit panneau 77 et une patte 80 solidaire de ladite paroi 53 de fond.

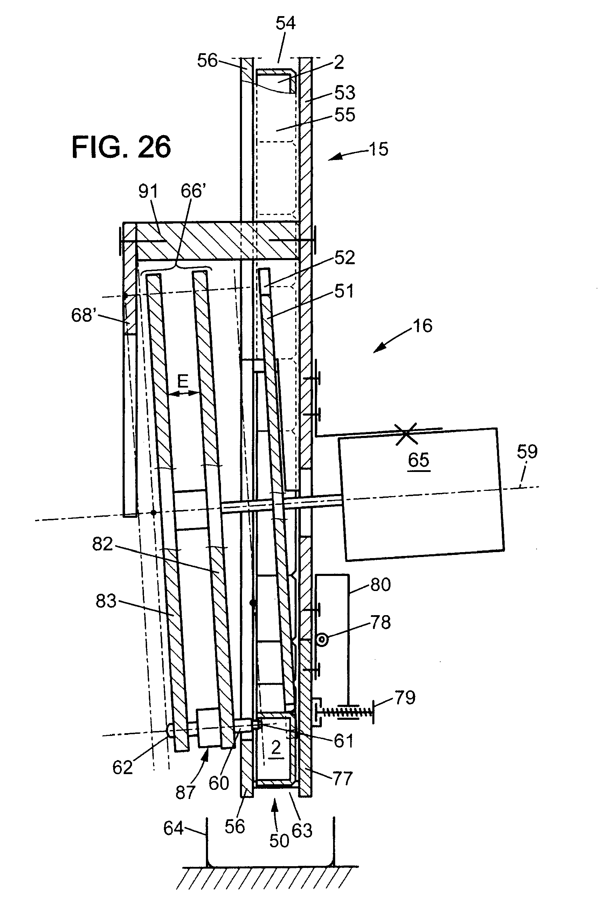

On va, à l'aide des figures 26 à 28, décrire un module 16 de propulsion et de sélection qui ne diffère du module décrit précédemment que par la manière dont les doigts 60 de maintien sont entraînés, soit vers une première position stable active, soit vers une deuxième position stable mais inactive de maintien des objets 2.

Un flasque 66' de guidage des doigts 60 est constitué de deux disques 82, 83, coaxiaux, en matériau magnétique. Le moteur 65 entraîne en rotation, autour de l'axe 59, un ensemble monobloc comprenant successivement le long dudit axe 59 : la roue 51 à encoches, le disque 82 puis le disque 83. Les disques 82, 83 s'étendent radialement et sont distants axialement l'un de l'autre d'un entrefer E constant.

Les doigts 60 de maintien sont répartis autour de l'axe 59 de la même manière que les doigts 60 dans le module 16 illustré en figure 17. Chaque doigt 60 de maintien se présente sous la forme d'une broche 85 en matériau amagnétique, tel que de l'acier inoxydable, laquelle broche 85 coulisse en translation dans deux alésages qui sont alignés l'un avec l'autre et situés, pour l'un, dans le disque 82 et, pour l'autre, dans le disque 83. Ainsi, la broche 85 est libre en translation selon une direction perpendiculaire aux disques 82, 83.

Chacun des doigts 60 de maintien comprend également un aimant 86 permanent en forme de bague entourant la broche 85 et un espaceur 87 en matériau synthétique. L'espaceur 87 comprend une paroi 88 radiale emmanchée sur la broche 85 et une jupe 89 entourant l'aimant 86 permanent. L'aimant 86 permanent est fixé à la broche 85 en étant pris en sandwich entre une butée 90 de la broche 85 et la paroi 88 radiale de l'espaceur. L'aimant 86 et l'espaceur 87 sont disposés entre les deux disques 82, 83.

Le doigt 60 constitué de la broche 85, de l'aimant 86 et de l'espaceur 87, forme un ensemble monobloc qui est du type flottant en translation entre les deux disques 82, 83. La première position stable active du doigt 60 est telle que l'extrémité 61 dudit doigt 60 est située, comme précédemment, sur un cercle de référence, et l'extrémité 62 dudit doigt 60 est située sur l'autre cercle de référence.

De plus, l'aimant 86 permanent est plus proche du disque 82 que du disque 83 et il est situé à une distance D minimale du disque 82 égale à l'épaisseur de la paroi 88 radiale.

Lorsqu'un objet 2 défectueux repousse l'extrémité 61 du doigt 60 de manière à dépasser une position neutre « n » dudit doigt 60, dans laquelle l'aimant 86 permanent est à égale distance des disques 82 et 83, le doigt 60 de maintien est alors attiré dans sa deuxième position stable inactive.

Dans sa deuxième position stable inactive, l'aimant 86 est plus proche du disque 83 que du disque 82. L'extrémité 62 du doigt 60 de maintien est située sur le cercle extrême. De plus, l'aimant 86 est situé à une distance d minimale du disque 83 qui correspond au dépassement axial de la jupe 89 au-delà de l'aimant 86. De manière alternative, la distance d minimale pourrait également être déterminée par une butée disposée sur la broche 85.

De manière avantageuse, la distance d minimale correspondant à la deuxième position stable inactive est inférieure à la distance D minimale correspondant à la première position stable. Cela permet de garantir un effort de désenclenchement du doigt 60 aussi faible que souhaité pour détecter un défaut d'orientation de l'objet 2. Toutefois, l'effort de maintien du doigt 60 dans la deuxième position stable inactive est suffisamment élevé pour éviter que des vibrations dues aux cadences élevées de la machine d'apprêt ne viennent inopinément réenclencher ledit doigt 60.

Le module 16 comprend également une came 68' de réarmement qui peut se présenter sous la forme d'un disque comme précédemment figure 21 ou, comme représenté figure 26, sous la forme d'une demi-couronne s'étendant parallèlement au canal 50 de guidage. Cette came 68', en forme de demi-couronne, est fixée par un pied 91 à la paroi 53 de fond du dispositif 15.

De manière alternative, tout moyen de fixation de la came 68' de réarmement convient dès lors que ladite came présente une surface contre laquelle les extrémités 62 des doigts 60 peuvent s'appuyer lorsque lesdits doigts 60 sont en position stable inactive. La surface d'appui de la came 68' de réarmement s'étend parallèlement à la paroi 53 de fond du canal 50 de transit.

Ainsi, les extrémités 62 des doigts 60 qui auraient été déclenchées sont ramenées depuis la position inactive sur le cercle extrême vers une position sur le cercle arrière de référence. Il suffit que la came 68' pousse l'extrémité 62 de manière que le plan médian de l'aimant 86 permanent passe de la deuxième position stable inactive vers au moins la position neutre « n ». L'attraction de l'aimant 86 permanent par le disque 82 prévaut alors et attire l'ensemble du doigt 60 de maintien dans la première position stable active de maintien des objets 2.

Les figures 29 à 32 montrent, sur les flancs de la machine, un aménagement qui permet d'accéder aux tasseaux 6 du convoyeur 4 afin de remédier à un incident sur ces tasseaux sans avoir à démonter toute la machine. En effet, les tasseaux 6 sont guidés à chacune de leur extrémité sur la languette 36 des rails 26, 27, continus, qui sont solidaires du châssis 3 de la machine et, en particulier, de la paroi 10 qui constitue l'intérieur de la courbe du convoyeur 4 et de la paroi 11 qui habille le contour extérieur dudit convoyeur.

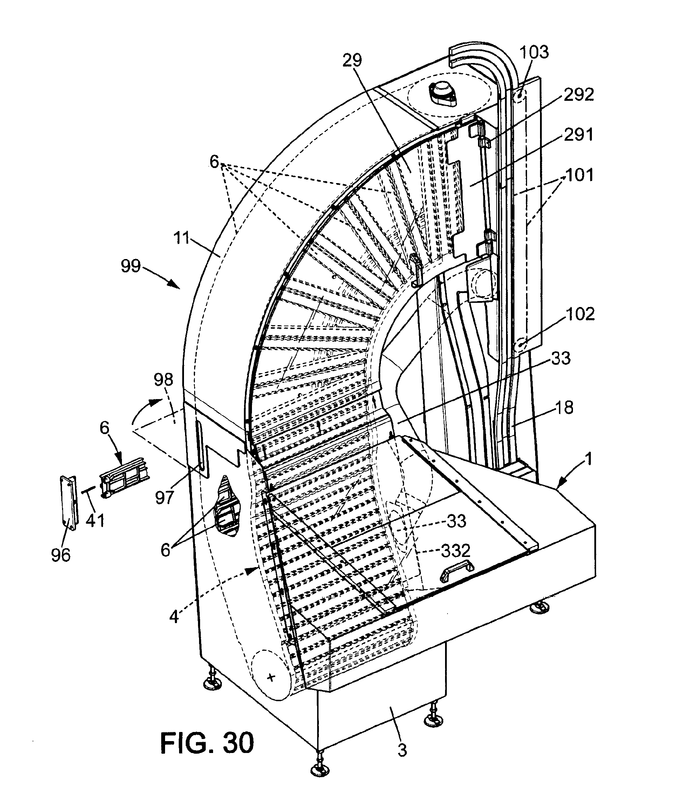

On remarque, figure 29, une plaque 96 qui est fixée sur la paroi 10 et, figure 30, une plaque 96 identique, qui est démontée, laissant libre le passage pour un tasseau 6. Ces plaques 96 obturent chacune une fenêtre 97 qui est ouverte sur les rails 26, 27, servant au guidage du brin inactif du convoyeur 4. Ces plaques 96 sont, de plus, situées au niveau d'un volet 98 qui est situé sur la paroi 99 arrière de la machine, lequel volet 98 permet de dévoiler et d'accéder à une partie du brin inactif du convoyeur 4.

Sur la figure 30, le tasseau 6 est représenté partiellement, en position d'extraction, après enlèvement de la plaque 96 ; il a pu être extrait de l'intérieur de la machine après sa désolidarisation de la chaîne 5 d'entraînement, grâce au démontage de la broche 41 qui les relie ensemble.

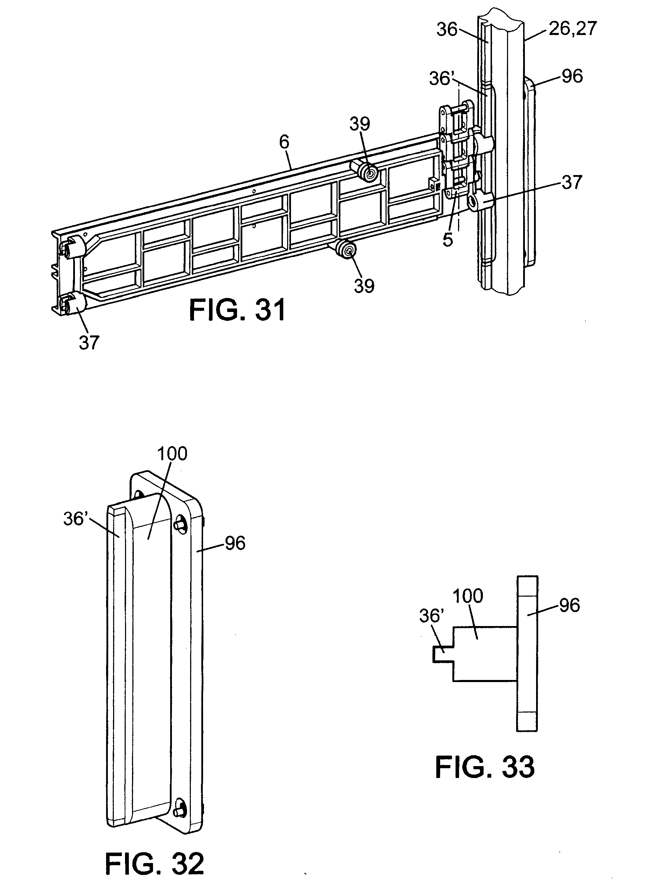

La figure 31 montre, d'une façon plus détaillée, le rail 26 avec sa languette 36 principale qui permet de guider le tasseau 6 ; le guidage est le même avec le rail 27. Sur cette figure 31, on remarque également la plaque 96 qui permet d'assurer une continuité de guidage du tasseau 6 sur le rail 26, ou 27, lorsque ledit tasseau passe devant la fenêtre 97.

Comme représenté également figures 32 et 33, la plaque 96 comporte une partie qui fait office de bouchon ; ce bouchon 100 se positionne et se cale de façon précise dans la fenêtre 97 et on remarque, en saillie de ce bouchon 100 et orientée vers l'intérieur de la machine, une portion de languette 36' qui fait office de languette de substitution ; cette languette 36' de substitution se place exactement dans le prolongement des extrémités de la languette 36 principale du rail 26 ou 27 correspondant, laquelle languette 36 principale étant effectivement interrompue au niveau de chaque fenêtre 97. Les dimensions de la fenêtre 97, en hauteur et en largeur, correspondent au moins aux dimensions de la section de l'enveloppe du tasseau 6.

Les figures 29 et 30 montrent également un aménagement au niveau du dispositif 15 de convoyage des objets 2 et, en particulier, au niveau de la goulotte 18 élévatrice qui s'étend vers une goulotte d'alimentation d'un poste de bouchage, par exemple. Cet aménagement vise à réduire les frottements entre les objets 2 et l'une au moins des parois de la goulotte 18 dans laquelle s'élève lesdits objets 2.

Comme représentée sur les figures, de façon schématique, une courroie 101, sans fin, tendue entre deux poulies 102 et 103 qui sont espacées verticalement, fait office de paroi mobile au niveau de la goulotte 18 élévatrice ; cette courroie 101 circule à une vitesse qui est du même ordre que la vitesse de progression des objets 2 dans ladite goulotte 18 élévatrice ; de préférence, la vitesse d'évolution de la courroie 101 est sensiblement supérieure, de l'ordre de 5 pour cent, à ladite vitesse de progression desdits objets 2, dans ladite goulotte 18 élévatrice.

## Revendications

1. Procédé de préparation d'objets (2) de bouchage alignés dans les rainures (19) des tasseaux (6) d'un convoyeur (4) sans fin d'une machine d'apprêt, **caractérisé en ce qu'**il consiste à modifier, au moyen desdits tasseaux (6), la position de chaque ligne d'objets (2) pour les faire passer d'une position horizontale à une position qui est suffisamment inclinée pour provoquer la vidange desdites rainures par gravité, expédiant lesdits objets (2) vers une zone (24) d'accueil et de transit où ils s'engagent, en file indienne, dans la goulotte (17) d'un dispositif (15) de convoyage.

2. Procédé de préparation d'objets (2), selon la revendication 1, **caractérisé en ce qu'**il comporte une opération de préparation des objets (2) alignés dans chaque rainure (19) de tasseau (6) préalablement à leur vidange, laquelle opération de préparation consiste à déplacer la ligne d'objets (2) vers le haut, dans sa rainure (19), de façon à pouvoir aménager une sorte d'avance à l'éjection, laquelle avance permet au train d'objets (2) de commencer à prendre de la vitesse, par gravité, avant de quitter sa rainure (19).

3. Procédé de préparation d'objets (2), selon la revendication 1, **caractérisé en ce qu'**il consiste :
- à accumuler, en file indienne, les objets (2) qui proviennent du poste de vidange des tasseaux (6) dans une première portion de la goulotte (17) d'amenée desdits objets (2) au dispositif (15) de convoyage, pour gaver ce dernier,
- à faire prendre en charge lesdits objets (2) au niveau de la partie inférieure de cette goulotte (17) d'amenée, par un système de propulsion, du type roue (51) à encoches (52), disposé dans un canal (50) semi-circulaire, en forme de U,
- à élever lesdits objets (2) dans une seconde portion de goulotte, appelée goulotte (18) d'élévation, au-dessus du niveau de la zone (24) d'accueil et de transit, afin de les livrer à l'entrée de la goulotte d'alimentation du poste de bouchage, par exemple.

4. Procédé de préparation d'objets (2), selon la revendication 3, **caractérisé en ce qu'**il consiste à effectuer une opération complémentaire de sélection, de contrôle et de tri desdits objets (2), au niveau du module de propulsion afin d'éliminer les objets (2) qui ne sont pas conformes et/ou ceux qui seraient encore mal orientés, laquelle opération complémentaire consiste, lors du passage desdits objets (2) dans le canal (50) de guidage dudit module de propulsion, à mettre en oeuvre des moyens associés à la roue (51) à encoches pour - maintenir les objets (2) correctement orientés, et conformes, dans leurs encoches (52) respectives durant le temps de passage devant une fenêtre (63) d'éjection aménagée à la partie inférieure dudit canal (50) de guidage ou pour-abandonner les objets (2) mal orientés ou non conformes devant ladite fenêtre (63) où ils sont évacués automatiquement.

5. Machine d'apprêt du type à convoyeur (4) sans fin comportant des tasseaux (6) dont les rainures (19) contiennent des objets (2) du genre bouchons, capsules ou autres, comprenant, pour la mise en oeuvre du procédé de préparation desdits objets (2), selon l'une quelconque des revendications 1 à 4, d'une part :
- un poste (20) pour le chargement desdites rainures (19), lequel poste (20) est constitué d'une trémie (1) qui est portée par un châssis (3) et qui contient lesdits objets (2) à apprêter,
- un poste (21) de sélection et de triage desdits objets (2), lequel poste (21) est installé au-dessus de ladite trémie (1) pour éliminer les objets (2) mal positionnés et/ou mal orientés dans lesdites rainures (19),
- un poste (22) de préparation des objets (2) dans leur rainure (19) sous forme d'une ligne ou d'un train compact,
- un poste (23) de vidange desdites rainures (19), lequel poste (23) de vidange comprend une zone (24) d'accueil et de transit où ledit train d'objets (2) est dirigé vers la goulotte (17) du dispositif (15) de convoyage,
et, d'autre part, un système de convoyage constitué :
- dudit convoyeur (4) à tasseaux qui comprend une chaîne (5) sans fin tendue entre deux axes (7, 8) et sur laquelle sont fixés lesdits tasseaux (6), laquelle chaîne (5) est du type apte à s'incurver dans le plan passant par l'axe de ses maillons (9),
- des moyens d'entraînement de ladite chaîne (5) pour faire circuler le brin (4a) actif dudit convoyeur (4) successivement dans ladite trémie (1), puis au poste (21) de sélection et de tri et enfin au poste (23) de vidange,
- d'un chemin en forme de crosse porté par ledit châssis et qui se décompose, du côté de la partie active de prélèvement des objets (2), en plusieurs portions dont, notamment : - une première portion rectiligne montante qui s'étend dudit poste (20) de chargement jusqu'à un niveau situé au-dessus dudit poste (21) de sélection et de tri, et, - une portion plane inscrite en courbe et dans laquelle lesdits tasseaux (6) basculent et se mettent en éventail afin de compacter et de mettre en charge chaque ligne d'objets (2) en vue de son éjection par gravité, au niveau dudit poste (23) de vidange, lequel chemin est constitué de rails (26, 27) qui se prolongent, au niveau desdits axes (7, 8) situés aux extrémités de ladite chaîne (5) sans fin, par des flasques (26', 27') respectivement assurant la continuité desdits rails, lesquels rails (26, 27) et flasques (26', 27') coopèrent avec chaque tasseau (6) pour en assurer le guidage et l'orientation sur la longueur dudit chemin.

6. Machine d'apprêt selon la revendication 5, **caractérisée en ce que** les moyens de guidage et d'orientation des tasseaux (6) comprennent :
- d'une part, des rails (26, 27) disposés latéralement sur le châssis (3) pour établir la surface de circulation desdits tasseaux (6) et contrôler leur tangage, lesdits tasseaux (6) comportant des éléments de guidage disposés à leurs extrémités pour coopérer avec lesdits rails (26, 27) latéraux, et,
- d'autre part, un rail (34) faisant office de came pour commander, notamment, le mouvement angulaire des tasseaux (6) les uns par rapport aux autres, lesquels tasseaux (6) comportent au moins une paire de galets (39) suiveurs qui sont guidés par des gorges (40) dudit rail (34) pour adapter l'orientation desdits tasseaux (6) en fonction de leur position sur ledit chemin et leur faire prendre, en particulier, - une position horizontale pour le poste (20) de chargement et pour le poste (21) de sélection et de tri et, - une position sensiblement verticale pour le poste (23) de vidange avec, entre les deux, - une position évolutive en éventail au niveau du poste (22) de préparation de la vidange desdits tasseaux (6).

7. Machine d'apprêt selon la revendication 5, **caractérisée en ce qu'**elle comporte des moyens pour préparer l'opération de vidange, lesquels moyens sont disposés en amont de la zone (24) d'accueil et de transit et ils consistent en un aménagement du genre rampe (28), formant un ressaut, et qui fait office de guide et se termine en une sorte de déversoir, laquelle rampe (28) est interposée entre les tasseaux (6) et le panneau frontal (29) qui retient les bouchons disposés dans les rainures desdits tasseaux (6), laquelle rampe (28) élève les objets (2) dans leur rainure (19) d'une hauteur qui correspond sensiblement à deux fois la largeur d'une rainure (19).

8. Machine d'apprêt selon la revendication 5, **caractérisée en ce que** les tasseaux (6) du convoyeur (4) se présentent sous la forme de plaques rectangulaires, chaque plaque étant munie, sur sa face visible, d'une ou de plusieurs rainures (19) pour la capture des objets (2) et, sur sa face cachée, perpendiculairement à la ou aux rainures (19) de capture desdits objets, elle comporte un évidement (42) qui est aménagé pour loger la chaîne (5), lequel évidement (42) comporte, du côté du petit rayon de courbe du poste (22) de préparation, un rebord (43) qui est arrondi avec un rayon correspondant sensiblement au rayon moyen de courbure de ladite chaîne (5) au niveau dudit poste (22) de préparation, laquelle chaîne (5) comporte des maillons (9) dont la longueur est de l'ordre du tiers de la largeur dudit tasseau (6) et elle est solidaire de chaque tasseau (6) au moyen d'une broche (41) qui s'étend entre les rebords dudit évidement (42) et qui traverse le maillon (9) central de la portion de chaîne (5) disposée dans ledit évidement (42).

9. Machine d'apprêt selon la revendication 5, **caractérisée en ce que** le dispositif (15) de convoyage des objets (2) qui sortent du poste (23) de vidange est constitué : - d'une goulotte (17) de prise en charge et d'amenée des objets (2), qui fait office d'accumulateur en aval du poste (23) de vidange, - d'une goulotte (18) élévatrice qui s'étend jusqu'au niveau de l'entrée de la goulotte d'alimentation d'un poste de bouchage et, entre ces deux goulottes (17, 18), - d'un module (16) qui comprend un canal (50) de guidage semi-circulaire en U, lequel canal (50) fait la jonction entre lesdites goulottes (17, 18) et il enveloppe, partiellement, une roue (51) à encoches (52) qui propulse lesdits objets (2) dans ladite goulotte (18) élévatrice.

10. Machine d'apprêt selon la revendication 9, **caractérisée en ce que** le module (16) de propulsion du dispositif (15) de convoyage présente, sur le canal (50) de guidage, deux secteurs angulaires en forme d'arcs de cercle qui assurent un guidage permanent des objets (2) et, entre les deux, un secteur angulaire ouvert, formant une fenêtre (63) d'éjection qui permet la réalisation d'une opération additionnelle de sélection et de triage des objets (2) et, en particulier d'objets (2) en forme de bouchons plastiques qui comportent un creux, lequel module (16) devient un module de propulsion et de sélection et il comporte des moyens complémentaires de sélection desdits objets (2), lesquels moyens sont constitués d'un système d'accompagnement des objets (2) qui est organisé pour maintenir les objets (2) conformes et bien orientés dans ledit canal (50) de guidage, ou pour larguer les objets (2) non conformes, ou mal orientés, au niveau de ladite fenêtre (63) d'éjection, lesquels moyens se situent au niveau du canal (50) de guidage qui loge la roue (51) à encoches.

11. Machine d'apprêt selon la revendication 10, **caractérisée en ce que** le système d'accompagnement des objets (2) comprend une pluralité de doigts (60) disposés en regard de chaque encoche (52) de la roue (51) à encoches, chaque doigt (60) étant mobile entre deux positions stables . - une première position stable pour laquelle le doigt (60) est disposé dans le creux de l'objet (2) qui est calé dans l'encoche (52) correspondante, pour maintenir ledit objet (2) dans son encoche (52) lors du passage devant la fenêtre (63) d'éjection et, - une deuxième position stable qui résulte d'un mouvement de recul du doigt (60) sous l'effet d'un obstacle et en particulier sous l'effet d'un contact avec un objet (2) mal orienté qui empêche ledit doigt (60) de s'introduire dans le creux dudit objet (2).

12. Machine d'apprêt selon la revendication 11, **caractérisée en ce que** le module (16) de propulsion et de sélection comprend :
- un moteur (78) d'entraînement de la roue (51) de propulsion à encoches (52),
- un flasque (66) disposé à distance de ladite roue (51), solidaire de l'axe (59) d'entraînement de cette dernière,
- les doigts (60) correspondant à chaque encoche (52), lesquels doigts (60) sont montés sur ledit flasque (66) de manière que toutes les extrémités de maintien desdits doigts (60) s'étendent le long d'un cercle de référence qui est coaxial audit axe (59) d'entraînement de ladite roue (51) à encoches.

13. Machine d'apprêt selon la revendication 11, **caractérisée en ce que** le module (16) de propulsion et de sélection comprend, au niveau de la roue (52) à encoches, deux disques (82, 83) coaxiaux parallèles en matériau magnétique, l'un des disques, au moins, servant de guide pour les doigts (60) de maintien des objets (2), lesquels doigts (60) sont constitués chacun d'une broche (85) en matériau amagnétique et ils sont montés libres en translation dans l'un au moins des deux disques (82, 83), selon une direction axiale, et un aimant (86) permanent, fixé à ladite broche (85), permet à cette dernière de flotter entre les deux disques (82, 83) coaxiaux, entre une position active stable de maintien desdits objets (2) et une position stable mais inactive, qui les laisse libres lors de leur passage devant la fenêtre (63) d'éjection.

14. Machine d'apprêt selon la revendication 11, **caractérisée en ce que** le module (16) de propulsion et de sélection comprend une came (68, 68') de réarmement des doigts (60) de maintien, laquelle came (68, 68') de réarmement, en forme de disque, par exemple, est apte à ramener lesdits doigts (60) de maintien lorsqu'ils sont situés hors de la fenêtre (63) d'éjection, depuis la position inactive de maintien jusqu'à la position active de maintien des objets (2).

15. Machine d'apprêt selon la revendication 9, **caractérisée en ce qu'**elle comporte, au niveau du dispositif de convoyage et, en particulier, au niveau de la goulotte (18) élévatrice qui s'étend vers une goulotte d'alimentation d'un poste de bouchage, une courroie (101), sans fin, tendue entre deux poulies (102) et (103) qui sont espacées verticalement, laquelle courroie (101) fait office de paroi mobile au niveau de ladite goulotte (18) élévatrice et elle circule à une vitesse qui est du même ordre que la vitesse de progression des objets (2) dans ladite goulotte (18) élévatrice, de préférence, cette vitesse d'évolution est supérieure, de l'ordre de 5 pour cent, à ladite vitesse de progression desdits objets (2) dans ladite goulotte (18) élévatrice.

## Patentansprüche

1. Verfahren zum Vorbereiten von Verschlussgegenständen (2), die in den Rillen (19) der Leisten (6) eines Endlosförderers (4) einer Endbearbeitungsmaschine ausgerichtet sind, **dadurch gekennzeichnet, dass** es die Veränderung der Position jeder Reihe von Gegenständen (2) mit Hilfe der Leisten (6) umfasst, um sie aus einer horizontalen Position in eine Position zu bringen, die ausreichend geneigt ist, um die Entleerung der Rillen durch die Schwerkraft zu bewirken, wobei die Gegenstände (2) zu einer Aufnahme- und Übergangszone (24) bewegt werden, wo sie einzeln hintereinander in die Rinne (17) einer Fördereinrichtung (15) gelangen.

2. Verfahren zum Vorbereiten von Gegenständen (2) nach Anspruch 1, **dadurch gekennzeichnet, dass** es einen Vorgang der Vorbereitung der Gegenstände (2) aufweist, die vor ihrer Entleerung in jeder Rille (19) einer Tragleiste (6) ausgerichtet sind, wobei der Vorbereitungsvorgang umfasst, die Reihe von Gegenständen (2) in ihrer Rille (19) nach oben zu bewegen, um eine Art Auswurfvorschub zu bewirken, wobei der Vorschub ermöglicht, dass der Zug von Gegenständen (2) durch die Schwerkraft Geschwindigkeit aufnehmen kann, bevor er seine Rille (19) verlässt.

3. Verfahren zum Vorbereiten von Gegenständen (2) nach Anspruch 1, **dadurch gekennzeichnet, dass** es umfasst:
- die Gegenstände (2), die von der Station zum Entleeren der Leisten (6) kommen, in einem ersten Abschnitt der Rinne (17) zum Zuführen der Gegenstände (2) zur Fördereinrichtung (15) einzeln hintereinander zu sammeln, um Letztere zu füllen,
- die Gegenstände (2) im Bereich des unteren Teils dieser Zufuhrrinne (17) durch ein Vortriebssystem von der Art eines Rads (51) mit Ausnehmungen (52), das in einem halbrunden U-förmigen Kanal (50) angeordnet ist, aufzunehmen
- die Gegenstände (2) in einem zweiten, als Hubrinne (18) bezeichneten Abschnitt der Rinne über den Bereich der Aufnahme- und Übergangszone (24) anzuheben, um sie beispielsweise zum Eingang der Zufuhrrinne der Verschließstation zu transportieren.

4. Verfahren zum Vorbereiten von Gegenständen (2) nach Anspruch 3, **dadurch gekennzeichnet, dass** es umfasst, einen ergänzenden Vorgang der Auswahl, Kontrolle und Sortierung der Gegenstände (2) im Bereich des Vortriebsmoduls auszuführen, um die Gegenstände (2), die nicht konform sind und/oder die gegebenenfalls noch schlecht ausgerichtet sind, zu entfernen, wobei der ergänzende Vorgang umfasst, beim Übergang der Gegenstände (2) in den Führungskanal (50) des Vortriebsmoduls Mittel, mit dem Ausnehmungsrad (51) verbunden sind, anzuwenden, - um die korrekt ausgerichteten und konformen Gegenstände (2) während der Zeit, in der sie ein im unteren Teil des Führungskanals (50) angeordnetes Auswurffenster (63) passieren, in ihren jeweiligen Ausnehmungen (52) zu belassen bzw. - um die schlecht ausgerichteten oder nichtkonformen Gegenstände (2) vor dem Fenster (63) zurückzulassen, wo sie automatisch abgeführt werden.

5. Endbearbeitungsmaschine von der Art eines Endlosförderers (4) mit Leisten (6), deren Rillen (19) Stopfen, Kapseln oder andere Gegenstände (2) enthalten, umfassend zur Umsetzung des Verfahrens zum Vorbereiten der Gegenstände (2) nach einem der Ansprüche 1 bis 4 einerseits:
- eine Station (20) zum Beladen der Rillen (19), wobei die Station (20) einen Trichter (1) umfasst, der von einem Gestell (3) getragen wird und die zu bearbeitenden Gegenstände (2) beinhaltet,
- eine Station (21) zum Auswählen und Sortieren der Gegenstände (2), wobei die Station (21) oberhalb des Trichters (1) installiert ist, um die schlecht in den Rinnen (19) positionierten und/oder ausgerichteten Gegenstände (2) zu entfernen,
- eine Station (22) zum Vorbereiten der Gegenstände (2) in ihrer Rille (19) in Form einer kompakten Reihe bzw. eines kompakten Zugs,
- eine Station (23) zum Entleeren der Rillen (19), wobei die Entleerstation (23) eine Aufnahme- und Übergangszone (24) umfasst, wo der Zug von Gegenständen (2) zur Rinne (17) der Fördereinrichtung (15) geleitet wird,
und andererseits ein Fördersystem, das Folgendes aufweist:
- den Förderer (4) mit Leisten, der eine zwischen zwei Achsen (7, 8) gespannte Endloskette (5) aufweist, an der die Leisten (6) befestigt sind, wobei die Kette (5) von der Art ist, die geeignet ist, sich in der durch die Achse seiner Glieder (9) verlaufenden Ebene zu krümmen,
- Mittel zum Antreiben der Kette (5), um das aktive Trum (4a) des Förderers (4) zunächst in den Trichter (1), anschließend zur Auswahl- und Sortierstation (21) und schließlich zur Entleerstation (23) zu bewegen,
- einen stabförmigen Weg, der vom Gestell getragen wird und der sich auf der Seite des aktiven Teils zur Entnahme der Gegenstände (2) in mehrere Abschnitte untergliedert, insbesondere: - einen ersten geradlinigen ansteigenden Abschnitt, der sich von der Beladestation (20) bis zu einem Bereich oberhalb der Auswahl- und Sortierstation (21) erstreckt, und - einen ebenen gekrümmten Abschnitt, in dem die Leisten (6) kippen und sich auffächern, um jede Reihe von Gegenständen (2) zu komprimieren und für ihren Auswurf durch die Schwerkraft im Bereich der Entleerstation (23) vorzubereiten, wobei der Weg aus Schienen (26, 27) ausgebildet ist, die sich jeweils im Bereich der Achsen (7, 8) an den Enden der Endloskette (5) durch Flansche (26', 27') verlängern und die Kontinuität der Schienen gewährleisten, wobei die Schienen (26, 27) und die Flansche (26', 27') mit jeder Tragleiste (6) zusammenwirken, um deren Führung und Ausrichtung über die Länge des Wegs zu gewährleisten.

6. Endbearbeitungsmaschine nach Anspruch 5, **dadurch gekennzeichnet, dass** die Führungs- und Ausrichtungsmittel der Leisten (6) Folgendes umfassen:
- einerseits Schienen (26, 27), die seitlich am Gestell (3) angeordnet sind, um die Lauffläche der Leisten (6) auszubilden und deren Nicken zu kontrollieren, wobei die Leisten (6) Führungselemente aufweisen, die an deren Enden angeordnet sind, um mit den Seitenschienen (26, 27) zusammenzuwirken, und
- andererseits eine Schiene (34), die als Nocken dient, um insbesondere die Winkelbewegung der Leisten (6) zueinander zu steuern, wobei die Leisten (6) zumindest ein Paar Folgerollen (39) aufweisen, die durch Auskehlungen (40) der Schiene (34) geführt werden, um die Ausrichtung der Leisten (6) entsprechend ihrer Position auf dem Weg anzupassen und zu bewirken, dass sie insbesondere - eine horizontale Position für die Beladestation (20) und für die Auswahl- und Sortierstation (21) sowie - eine im Wesentlichen vertikale Position für die Entleerstation (23) mit einer dazwischen befindlichen - fächerförmig evolutiven Position im Bereich der Vorbereitungsstation (22) zum Entleeren der Leisten (6) einnehmen.

7. Endbearbeitungsmaschine nach Anspruch 5, **dadurch gekennzeichnet, dass** sie Mittel zum Vorbereiten des Entleerungsvorgangs aufweist, wobei die Mittel der Aufnahme- und Übergangszone (24) vorgelagert sind und eine Einrichtung von der Art einer Rampe (28) umfassen, die einen Vorsprung ausbildet, als Führung dient und in einer Art Auslass endet, wobei die Rampe (28) zwischen den Leisten (6) und der Frontplatte (29), welche die in den Rillen der Leisten (6) angeordneten Stopfen zurückhält, angeordnet ist, wobei die Rampe (28) die Gegenstände (2) in ihrer Rille (19) in eine Höhe, die im Wesentlichen der doppelten Breite einer Rille (19) entspricht, anhebt.

8. Endbearbeitungsmaschine nach Anspruch 5, **dadurch gekennzeichnet, dass** die Leisten (6) des Förderers (4) die Form rechteckiger Platten aufweisen, wobei jede Platte auf ihrer sichtbaren Seite mit einer oder mehreren Rillen (19) zur Aufnahme der Gegenstände (2) ausgestattet ist und auf ihrer verborgenen Seite senkrecht zu der bzw. den Rillen (19) zur Aufnahme der Gegenstände eine Vertiefung (42) aufweist, die angeordnet ist, um die Kette (5) aufzunehmen, wobei die Vertiefung (42) auf der Seite des kleinen Krümmungsradius der Vorbereitungsstation (22) einen Rand (43) aufweist, der mit einem Radius abgerundet ist, der im Wesentlichen dem mittleren Krümmungsradius der Kette (5) im Bereich der Vorbereitungsstation (22) entspricht, wobei die Kette (5) Glieder (9) aufweist, deren Länge etwa ein Drittel der Breite der Tragleiste (6) beträgt, und mit Hilfe eines Stifts (41), der sich zwischen den Rändern der Vertiefung (42) erstreckt und das mittlere Glied (9) des in der Vertiefung (42) angeordneten Abschnitts der Kette (5) durchquert, fest mit jeder Tragleiste (6) verbunden ist.

9. Endbearbeitungsmaschine nach Anspruch 5, **dadurch gekennzeichnet, dass** die Einrichtung (15) zum Fördern der Gegenstände (2), die aus der Entleerstation (23) herauskommen, Folgendes umfasst: - eine Rinne (17) zum Übernehmen und Zuführen der Gegenstände (2), die als ein der Entleerstation (23) vorgelagerter Sammler dient, - eine Hubrinne (18), die sich bis zum Eintrittsbereich der Zufuhrrinne einer Verschließstation erstreckt, und zwischen diesen beiden Rinnen (17, 18) - ein Modul (16), das einen halbrunden U-förmigen Führungskanal (50) aufweist, wobei der Kanal (50) die Verbindung zwischen den Rinnen (17, 18) bildet und ein Rad (51) mit Ausnehmungen (52), welches die Gegenstände (2) in die Hubrinne (18) treibt, teilweise umschließt.

10. Endbearbeitungsmaschine nach Anspruch 9, **dadurch gekennzeichnet, dass** das Vortriebsmodul (16) der Fördereinrichtung (15) am Führungskanal (50) zwei kreisbogenförmige Winkelsektoren, die eine ständige Führung der Gegenstände (2) gewährleisten, und zwischen den beiden einen offenen Winkelsektor aufweist, der ein Auswurffenster (63) bildet, das die Ausführung eines zusätzlichen Vorgangs der Auswahl und Sortierung der Gegenstände (2) und insbesondere von Gegenständen (2) in Form von Kunststoffstopfen mit einer Aushöhlung ermöglicht, wobei das Modul (16) ein Vortriebs- und Auswahlmodul wird und ergänzende Mittel zum Auswählen der Gegenstände (2) aufweist, wobei die Mittel ein System zum Begleiten der Gegenstände (2) umfasst, das gestaltet ist, um die konformen und gut ausgerichteten Gegenstände (2) im Führungskanal (50) zu halten bzw. um die nichtkonformen oder schlecht ausgerichteten Gegenstände (2) im Bereich des Auswurffensters (63) abzuwerfen, wobei sich die Mittel im Bereich des Führungskanals (50), der das Ausnehmungsrad (51) aufnimmt, befinden.

11. Endbearbeitungsmaschine nach Anspruch 10, **dadurch gekennzeichnet, dass** das System zum Begleiten der Gegenstände (2) eine Vielzahl von Fingern (60) aufweist, die jeder Ausnehmung (52) des Ausnehmungsrads (51) zugewandt sind, wobei jeder Finger (60) zwischen zwei stabilen Positionen beweglich ist: - einer ersten stabilen Position, für die der Finger (60) in der Aushöhlung des Gegenstands (2), der in der entsprechenden Ausnehmung (52) festgeklemmt ist, angeordnet ist, um den Gegenstand (2) während des Passierens des Auswurffensters (63) in seiner Ausnehmung (52) zu halten, und - einer zweiten stabilen Position, die aus einer Rückzugsbewegung des Fingers (60) unter der Einwirkung eines Hindernisses und insbesondere unter der Einwirkung eines Kontakts mit einem schlecht ausgerichteten Gegenstand (2), der das Einführen des Fingers (60) in die Aushöhlung des Gegenstands (2) verhindert, resultiert.

12. Endbearbeitungsmaschine nach Anspruch 11, **dadurch gekennzeichnet, dass** das Vortriebs- und Auswahlmodul (16) Folgendes aufweist:
- einen Motor (78) zum Antreiben des Vortriebsrads (51) mit Ausnehmungen (52),
- einen Flansch (66), der vom Rad (51) beabstandet angeordnet und mit dessen Antriebsachse (59) fest verbunden ist,
- die jeder Ausnehmung (52) entsprechenden Finger (60), wobei die Finger (60) so am Flansch (66) befestigt sind, dass sich alle Halteenden der Finger (60) entlang eines Referenzkreises erstrecken, der zur Antriebsachse (59) des Ausnehmungsrads (51) koaxial ist.

13. Endbearbeitungsmaschine nach Anspruch 11, **dadurch gekennzeichnet, dass** das Vortriebs- und Auswahlmodul (16) im Bereich des Ausnehmungsrads (52) zwei koaxiale parallele Scheiben (82, 83) aus magnetischem Material aufweist, wobei zumindest eine der Scheiben als Führung für die Finger (60) zum Halten der Gegenstände (2) dient, wobei die Finger (60) jeweils einen Stift (85) aus nichtmagnetischem Material umfassen und in zumindest einer der beiden Scheiben (82, 83) in einer axialen Richtung frei verschiebbar angebracht sind und wobei ein am Stift (85) befestigter Dauermagnet (86) ermöglicht, dass selbiger zwischen den beiden koaxialen Scheiben (82, 83) zwischen einer aktiven stabilen Position zum Halten der Gegenstände (2) und einer inaktiven stabilen Position, die sie beim Passieren des Auswurffensters (63) freigibt, schwebt.

14. Endbearbeitungsmaschine nach Anspruch 11, **dadurch gekennzeichnet, dass** das Vortriebs- und Auswahlmodul (16) einen Nocken (68, 68') zum Wiederspannen der Haltefinger (60) aufweist, wobei der beispielsweise scheibenförmige Wiederspannnocken (68, 68') geeignet ist, die Haltefinger (60), wenn sie sich außerhalb des Auswurffensters (63) befinden, aus der inaktiven Position zum Halten in die aktive Position zum Halten der Gegenstände (2) zurückzubringen.

15. Endbearbeitungsmaschine nach Anspruch 9, **dadurch gekennzeichnet, dass** sie im Bereich der Fördereinrichtung und insbesondere im Bereich der Hubrinne (18), die sich zu einer Zufuhrrinne einer Verschließstation erstreckt, ein Endlosband (101) aufweist, das zwischen zwei vertikal beabstandeten Rollen (102) und (103) erstreckt, wobei das Band (101) als bewegliche Wand im Bereich der Hubrinne (18) dient und sich mit einer Geschwindigkeit bewegt, die etwa der Fortbewegungsgeschwindigkeit der Gegenstände (2) in der Hubrinne (18) entspricht, wobei diese Bewegungsgeschwindigkeit vorzugsweise um etwa 5 Prozent höher als die Fortbewegungsgeschwindigkeit der Gegenstände (2) in der Hubrinne (18) ist.

## Claims

1. Method for preparing capping objects (2) aligned in the slots (19) of the battens (6) of an endless conveyor (4) of a sealing element preparation machine, **characterized in that** it consists of modifying, by means of said battens (6), the position of each row of objects (2) so as to cause them to move from a horizontal position to a position that is sufficiently inclined to cause the unloading of said slots due to gravity, sending said objects (2) towards a receiving and transit area (24) where they enter, single file, into the chute (17) of a conveying device (15).

2. Method for preparing objects (2), according to claim 1, **characterized in that** it comprises an operation for preparing objects (2) aligned in each slot (19) of the battens (6) prior to their unloading, said preparation operation consisting of moving the row of objects (2) upwards, in its slot (19), so as to be able to establish a sort of head start to the ejection, said head start allowing the series of objects (2) to begin to assume velocity, due to gravity, before exiting its slot (19).

3. Method for preparing objects (2), according to claim 1, **characterized in that** it consists of:
- gathering into a single line the objects (2) coming from the batten (6) unloading station, in a first portion of the feed chute (17) that delivers said objects (2) to the conveying device (15), in order to force feed said conveying device,
- in the lower portion of this feed chute (17), passing control of said objects (2) to a propulsion system that has a star wheel (51) with notches (52), arranged in a U-shaped semi-circular channel (6),
- raising said objects (2) in a second chute portion, referred to as the rising chute (18), to above the level of the receiving and transit area (24), in order to deliver them to the entrance to the chute feeding the capping station, for example.

4. Method for preparing objects (2), according to claim 3, **characterized in that** it consists of carrying out a complementary operation of selecting, checking, and sorting said objects (2) at the propulsion module, in order to eliminate objects (2) which are non-compliant and/or those which are still incorrectly oriented, said complementary operation consisting of using, during the passage of said objects (2) in the guide channel (50) of said propulsion module, means associated with the star wheel (51) in order to: - maintain the correctly oriented and compliant objects (2) in their respective notches (52) during the time they pass in front of an ejection window (63) arranged in the lower portion of said guide channel (50), or - abandon the incorrectly oriented or non-compliant objects (2) in front of said window (63) where they are discharged automatically.

5. Sealing element preparation machine of the type having an endless conveyor (4) comprising battens (6) in which the slots (19) contain objects (2) that are stoppers, caps, or other objects, comprising, in order to make use of the method for preparing said objects (2) according to any one of claims 1 to 4:
- a station (20) for loading said slots (19), said station (20) comprising a hopper (1) which is supported by a chassis (3) and for containing said objects (2) to be prepared,
- a station (21) for selecting and sorting said objects (2), said station (21) being installed above said hopper (1) in order to eliminate the objects (2) incorrectly positioned and/or incorrectly oriented in said slots (19),
- a station (22) for preparing the objects (2) in their slot (19) into a compact series or line,
- a station (23) for unloading said slots (19), said unloading station (23) comprising a receiving and transit area (24) where said series of objects (2) is directed towards the chute (17) of the conveying device (15),
and a conveyance system consisting of:
- said conveyor (4) equipped with battens, which comprises an endless chain (5) extending between two shafts (7, 8), said battens (6) being attached to said chain, and said chain (5) being able to curve in the plane passing through the axis of its links (9),
- means for driving said chain (5) so that the active side (4a) of said conveyor (4) successively travels into said hopper (1), then to the selection and sorting station (21), and lastly to the unloading station (23),
- an arching path supported by said chassis and which can be broken down into several portions on the side of the active object (2) collection part, including in particular: - a first straight rising portion which extends from said loading station (20) to a level located above said selection and sorting station (21), and - a curving planar portion in which said battens (6) swing and fan out in order to bring together and add load to each line of objects (2) to prepare them for gravitational ejection at said unloading station (23), said path consisting of rails (26, 27) that are extended, at said shafts (7, 8) located at the ends of said endless chain (5), by flanges (26', 27') respectively ensuring the continuity of said rails, said rails (26, 27) and flanges (26', 27') cooperating with each batten (6) in order to guide and orient it along the entire length of said path.

6. Preparation machine according to claim 5, **characterized by** the means for guiding and orienting the battens (6) comprise: on the one hand,
- rails (26, 27) arranged at the sides of the chassis (3) in order to establish the surface on which said battens (6) travel and to control their pitch motion, said battens (6) comprising guide elements arranged at their ends for cooperating with said side rails (26, 27), and, on the other hand,
- a rail (34) acting as a cam in order to control, in particular, the angular orientation of the battens (6) relative to each other, said battens (6) comprising at least one pair of cam followers (39) which are guided by grooves (40) in said rail (34) in order to adapt the orientation of said battens (6) according to their position on said path and cause them to assume, in particular, - a horizontal position for the loading station (20) and for the selection and sorting station (21), and - a substantially vertical position for the unloading station (23) with, between the two, - an evolving fanned-out position for the station (22) that prepares for the unloading of said battens (6).

7. Preparation machine according to claim 5, **characterized in that** it comprises means for preparing for the unloading operation, said means being arranged upstream from the receiving and transit area (24) and consisting of a ramp-like arrangement (28), forming a shoulder which acts as a guide and ends in a sort of spillway, said ramp (28) being placed between the battens (6) and the front panel that retains the caps arranged within the slots of said battens (6), said ramp (28) raising the objects (2) in their slot (19) by a height which substantially corresponds to twice the width of a slot (19).

8. Preparation machine according to claim 5, **characterized by** the battens (6) of the conveyor (4) being in the form of rectangular plates, each plate being equipped, on its visible face, with one or more slots (19) for capturing objects (2) and, on its hidden face, perpendicularly to the slot or slots (19) for capturing said objects, it comprises a recess (42) which is arranged to house the chain (5), said recess (42) comprising, on the side of the small radius of curvature of the preparation station (22), a curved edge (43) with a radius substantially corresponding to the mean radius of curvature of said chain (5) at said preparation station (22), said chain (5) comprising links (9) of a length on the order of a third of the width of said batten (6) and said chain being integrally attached to each batten (6) by means of a pin (41) extending between the edges of said recess (42) and passing through the central link (9) of the portion of chain (5) located within said recess (42).

9. Preparation machine according to claim 5, **characterized in that** the device (15) for conveying the objects (2) exiting the unloading station (23) consists of: - a chute (17) for receiving and delivering the objects (2), which acts as an accumulator downstream from the unloading station (23), - a rising chute (18) which extends to the entrance to the chute feeding a capping station, and, between these two chutes (17, 18), - a module (16) which comprises a U-shaped semicircular guide channel (50), said channel (50) establishing the connection between said chutes (17, 18) and partially enveloping a star wheel (51) with notches (52) which propels said objects (2) into said rising chute (18).

10. Preparation machine according to claim 9, **characterized in that** the propulsion module (16) of the conveying device (15) has, in the guide channel (50), two angular sectors formed as arc sections which continuously guide the objects (2) and, between the two, an open angular sector forming an ejection window (63) which allows conducting an additional selection and sorting operation on the objects (2), particularly on objects (2) in the form of plastic caps which contain a hollow, said module (16) becoming a propulsion and selection module and comprising complementary means for selecting said objects (2), said means consisting of a support system for the objects (2) which is organized to retain the compliant and properly oriented objects (2) in said guide channel (50) or to release the non-compliant or improperly oriented objects at said ejection window (63), said means being located at the guide channel (50) in which the star wheel (51) is housed.

11. Preparation machine according to claim 10, **characterized in that** the support system for the objects (2) comprises a plurality of pins (60) arranged opposite each notch (52) of the star wheel (51), each pin (60) being movable between two stable positions: - a first stable position in which the pin (60) is placed in the hollow of the object (2) held within the corresponding notch (52), in order to maintain said object (2) in its notch (52) as it passes in front of the ejection window (63), and - a second stable position which results from a backwards movement of the pin (60) caused by an obstacle and in particular by contact with an improperly oriented object (2) which prevents said pin (60) from entering the hollow of said object (2).

12. Preparation machine according to claim 11, **characterized in that** the propulsion and selection module (16) comprises:
- a motor (78) that drives the notched (52) propelling star wheel (51),
- a flange (66) arranged at a distance from said wheel (51), integrally attached to the drive shaft (59) of the wheel,
- pins (60) corresponding to each notch (52), said pins (60) being mounted on said flange (66) in a manner such that all the retaining ends of said pins (60) are positioned along a circle of reference which is coaxial to said drive shaft (59) of said star wheel (51).

13. Preparation machine according to claim 11, **characterized in that** the propulsion and selection module (16) comprises, at the star wheel (52), two parallel coaxial disks (82, 83) of magnetic material, at least one of the disks acting as a guide for the object (2) retaining pins (60), said pins (60) each consisting of a rod (85) of non-magnetic material and said pins being mounted to freely move translationally within at least one of the two disks (82, 83), in an axial direction, and a permanent magnet (86) attached to said rod (85), allowing the pin to float between the two coaxial disks (82, 83), between a stable active position which retains said objects (2) and a stable but inactive position which leaves the objects free during their passage in front of the ejection window.

14. Preparation machine according to claim 11, **characterized in that** the propulsion and selection module (16) comprises a reset cam (68, 68') for the retaining pins (60), said reset cam (68, 68'), in the form of a disk, for example, being able to return said retaining pins (60), when they are located outside the ejection window (63), from the inactive retaining position to the active retaining position for the objects (2).

15. Preparation machine according to claim 9, **characterized in that** it comprises, at the conveying device and in particular at the rising chute (18) extending to a chute feeding a capping station, an endless belt (101) extending between two pulleys (102) and (103) spaced vertically apart, said belt (101) acting as a moving wall for said rising chute (18) and traveling at a speed that is on the same order as the speed at which the objects (2) advance in said rising chute (18), this travel speed preferably being about 5 percent greater than said speed at which said objects (2) advance in said rising chute (18).
